(19) Europäisches Patentamt
European Patent Office
Office européen des brevets

(11) EP 4 737 524 A1

(12) # EUROPEAN PATENT APPLICATION

published in accordance with Art. 153(4) EPC

(43) Date of publication:
**06.05.2026 Bulletin 2026/19**

(21) Application number: **24831594.7**

(22) Date of filing: **05.06.2024**

(51) International Patent Classification (IPC):
***C09D 11/38*** (2014.01) ***B41J 2/01*** (2006.01)
***B41J 2/17*** (2006.01) ***B41M 5/00*** (2006.01)

(52) Cooperative Patent Classification (CPC):
**B41J 2/01; B41J 2/17; B41M 5/00; C09D 11/38**

(86) International application number:
**PCT/JP2024/020503**

(87) International publication number:
**WO 2025/004724 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 JP 2023107790**

(71) Applicant: **Konica Minolta, Inc.**
**Tokyo 100-7015 (JP)**

(72) Inventors:
- **NAKAHARA Issei**
  **Tokyo 100-7015 (JP)**
- **KATSUDA Ai**
  **Tokyo 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INKJET INK, SOLDER RESIST, PRINTED WIRING BOARD, METHOD FOR FORMING COATING FILM, AND DEVICE FOR FORMING COATING FILM**

(57) This inkjet ink comprises a polymerizable monomer, a blocked isocyanate, and a photopolymerization initiator, and has a water content, as determined by the Karl Fischer method, in the range of 0.05-0.60 mass% relative to the total mass of the inkjet ink.

FIG.1

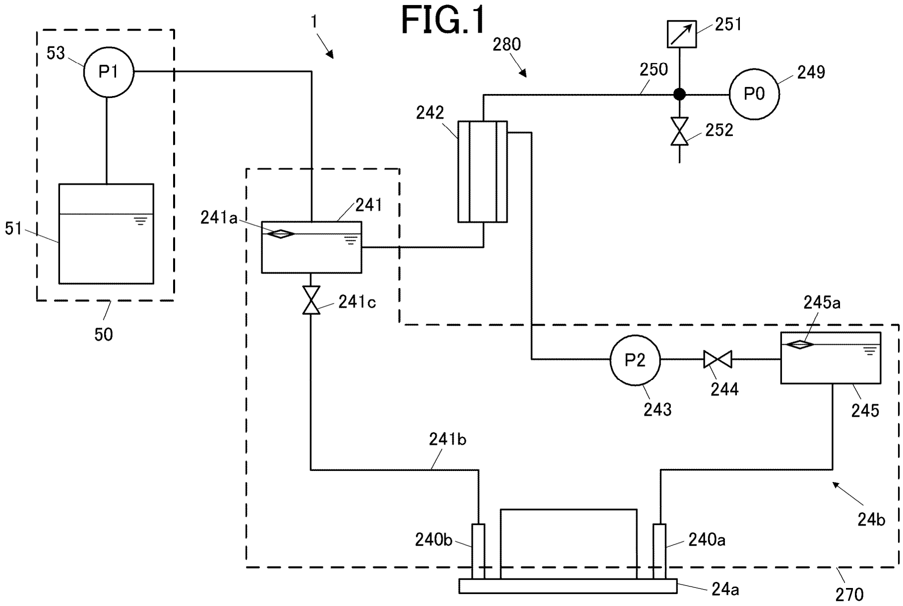


EP 4 737 524 A1

## Description

### Technical Field

The present invention relates to an inkjet ink, a solder resist, a printed wiring board, a method for forming a coating film, and a coating film forming apparatus. In particular, the present invention relates to an inkjet ink and the like that can provide good ejection property, stable curability, and coating film performance even when an inkjet ink containing a blocked isocyanate is used.

### Background Art

On a printed wiring board in a printed circuit board (PCB), an ink is applied and cured to form an insulating film (solder resist film) for the purpose of protecting a circuit pattern. Conventionally, the solder resist has been patterned to match the wiring of the PCB by using silk screen printing, a photographic development method, a direct exposure machine, or the like. On the other hand, in recent years, a method for applying a solder resist film by an inkjet method has been studied from the viewpoints of material loss and environmental regulations.

For example, it has already been proposed to form a solder resist on a copper-clad laminate for a printed wiring board with an inkjet printer using an inkjet ink containing a thermosetting agent (see, for example, Patent Documents 1 to 3).

The inkjet method can greatly reduce the number of steps and labor as compared with photolithography, which requires a photomask, and a screen printing method using resist ink or marking ink, which requires a screen. Furthermore, the inkjet method can reduce consumables such as a developing solution, various inks, and a cleaning solvent, and also reduce wastewater, which is expected to lead to a cleaner environment.

However, in an ink containing the thermosetting agent, in particular a blocked isocyanate, water or a hydroxy group contained in the ink reacts with the blocked isocyanate to generate a solid. Therefore, there is a problem in that curing or ejection failure easily occurs in the inkjet printer.

In particular, curable ink is usually heated to reduce the ink viscosity before ejection in order to increase the inkjet ejection performance, but the heating further accelerates the generation of solids.

Therefore, a method for suppressing the water content to be as low as 500 ppm at the time of producing an ink containing an isocyanate group has been proposed (for example, see Patent Document 4).

However, the method of limiting the water content to 500 ppm is difficult to achieve in practice because of the large production load, difficulty in maintenance and storage, and the resulting increase in costs. In addition, the above method is based on the premise that the ink is used immediately after production.

### Citation List

### Patent Literature

Patent Document 1: Japanese Patent No. 06069300
Patent Document 2: Japanese Unexamined Patent Application Publication No. 2011-043565
Patent Document 3: Japanese Patent No. 05969208
Patent Document 4: Japanese Unexamined Patent Application Publication No. 2014-201593

### Summary of Invention

### Technical Problem

The present invention has been made in consideration of the above-mentioned problems and situations. A problem to be solved by the present invention is to suppress generation of solids in a coating film forming apparatus when an inkjet ink containing a blocked isocyanate is used. As a result, it is an object of the present invention to provide an inkjet ink, a solder resist, a printed wiring board, a method for forming a coating film, and a coating film forming apparatus, with which good ejection property, stable curability, and coating film performance can be obtained.

Note that hereinafter, the term "inkjet ink" is also referred to simply as "ink".

Solution to Problem

In order to solve the above-described problem, the present inventors have defined the water content of an inkjet ink containing a blocked isocyanate in the course of investigating the cause and the like of the above-described problem. As a result, the present inventors have found that it is possible to provide an inkjet ink or the like that can suppress the generation of cured products or solids in a coating film forming apparatus and can obtain good ejection property, stable curability, and coating film performance. This has led to the present invention.

1. An inkjet ink containing: a polymerizable monomer; a blocked isocyanate; and a photopolymerization initiator, wherein a water content of the inkjet ink measured by a Karl Fischer method is within a range of 0.05 to 0.60% by mass relative to a total mass of the inkjet ink.
2. The inkjet ink according to item 1, wherein the ink is configured to be ejected at a temperature of 40°C or higher.
3. The inkjet ink according to item 1, wherein the blocked isocyanate has an aromatic ring structure.
4. The inkjet ink according to item 1, wherein the blocked isocyanate has an isocyanurate structure.
5. The inkjet ink according to item 1, wherein the inkjet ink contains, relative to the inkjet ink, 30% by mass or more of the polymerizable monomer having an octanol/water partition coefficient (ClogP) value in a range of 2.0 to 7.0.
6. The inkjet ink according to item 1, wherein the polymerizable monomer contains a polymerizable monomer having at least one bisphenol A structure.
7. The inkjet ink according to item 1, wherein a sum of a hydroxy value of a compound contained in the inkjet ink is 60 mg KOH/g or less, the compound having a hydroxy group.
8. The inkjet ink according to item 1, wherein the inkjet ink is contained in a container having a water vapor transmission rate within a range of 0.05 to 1.50 $g/m^2 \cdot day \cdot atm$ under conditions of 40°C and 90% RH.
9. A solder resist containing the inkjet ink according to any one of items 1 to 8.
10. A printed wiring board comprising the solder resist according to item 9.
11. A method for forming a coating film, comprising: using the inkjet ink according to any one of items 1 to 8; and heating the inkjet ink to 40°C or higher in a channel for supplying the inkjet ink to an inkjet head of a coating film forming apparatus.
12. A coating film forming apparatus comprising: the inkjet ink according to any one of claims 1 to 8; and a means for heating the inkjet ink to 40°C or higher in a channel for supplying the inkjet ink to an inkjet head of the coating film forming apparatus.

Advantageous Effects of Invention

By the above-described means of the present invention, even when an ink containing a blocked isocyanate is used, the generation of solids in a coating film forming apparatus can be suppressed. As a result, it is possible to provide an inkjet ink, a solder resist, a printed wiring board, a method for forming a coating film, and a coating film forming apparatus, with which good ejection property, stable curability, and coating film performance can be obtained.

Although the realization mechanism or action mechanism of the effects of the present invention is not clear, the present inventors infer the mechanism as follows.

In the ink containing the blocked isocyanate, water or a hydroxy group contained in the ink reacts with the blocked isocyanate to generate a solid. In particular, heating such an ink accelerates the generation of solids. As a result, when solids are generated in the coating film forming apparatus, it leads to ejection failure.

The presumed mechanism for the generation of solids involves the reaction of the blocked isocyanate with water or a hydroxy group in the ink, resulting in hydrolysis of the blocked isocyanate (NCO) portion and generation of amine. Furthermore, an amino group and an NCO moiety react with each other to form a multimer with a urea-based bond site. It is also presumed that an alcohol component generated by hydrolysis of the acrylic monomer reacts with the NCO moiety, leading to polymerization.

Therefore, in the present invention, the water content of the ink is set to be in a range of 0.05 to 0.60% by mass relative to the total mass of the ink. Thus, the blocked isocyanate in the ink can be inhibited from reacting with water or a hydroxy group. As a result, the generation of solids in the coating film forming apparatus can be suppressed, leading to good ejection property, stable curability, and coating film performance.

Brief Description of Drawings

[FIG. 1] This is a diagram illustrating an ink channel of an inkjet recording apparatus according to the present embodiment.

[FIG. 2] This is a schematic cross-sectional view of an external reflux type deaeration module.
[FIG. 3A] This is a schematic cross-sectional view of an internal configuration of a central tube of the external reflux type deaeration module.
[FIG. 3B] This is a schematic cross-sectional view of an internal configuration of the central tube of the external reflux type deaeration module.

Description of Embodiments

An inkjet ink according to the present invention is an inkjet ink containing a polymerizable monomer, a blocked isocyanate, and a photopolymerization initiator, wherein the polymerizable monomer is a polyfunctional (meth)acrylate, and the water content of the inkjet ink measured by the Karl Fischer method is in a range of 0.05 to 0.60% by mass relative to the total mass of the inkjet ink.
This feature is a technical feature common to or corresponding to each of the following embodiments.
As an embodiment of the present invention, it is preferable that the ink is configured to be ejected at a temperature of 40°C or higher from the viewpoint that the viscosity can be reduced. That is, since monomers with high molecular weight and strong intermolecular interactions are used to achieve performance, the viscosity can be adjusted by heating the ink to 40°C or higher for ejection.
It is preferable that the blocked isocyanate has an aromatic ring structure from the viewpoint that both the thermal dissociation temperature and the curing performance can be achieved, thereby enhancing the robustness against solid generation during heating.
It is preferable that the blocked isocyanate has an isocyanurate structure from the viewpoint of excellent adhesion of a coating film.
It is preferable that the polymerizable monomer having an octanol/water partition coefficient (ClogP) value in a range of 2.0 to 7.0 is contained in an amount of 30% by mass or more relative to the inkjet ink. Thus, the hygroscopicity can be reduced and the robustness against the solid generation can be enhanced.
It is preferable that the polymerizable monomer contains a polymerizable monomer having at least one bisphenol A structure from the viewpoint that the polymerizable monomer is a hydrophobic monomer and has low hygroscopicity.
It is preferable that the sum of the hydroxy values of compounds that are contained in the inkjet ink and that have hydroxy groups is 60 mg KOH/g or less from the viewpoints of prevention of the solid generation and excellent ejection property.
It is preferable that the ink is contained in a container having a water vapor transmission rate of 0.05 to 1.50 $g/m^2 \cdot day \cdot atm$ under conditions of 40°C and 90% RH from the viewpoint that an increase in the water content of the ink can be suppressed.
It is preferable that a solder resist according to the present invention contains the inkjet ink from the viewpoint that the coating film performance of the solder resist is improved.
It is preferable that a printed wiring board according to the present invention includes the solder resist, from the viewpoint that a circuit pattern of the printed wiring board can be protected with the solder resist having good coating film performance.
A method for forming a coating film according to the present invention is a method for forming a coating film, including: using an inkjet ink; and heating the inkjet ink to 40°C or higher in a channel for supplying the inkjet ink to an inkjet head of a coating film forming apparatus.
Further, a coating film forming apparatus according to the present invention is a coating film forming apparatus including an inkjet ink, and a means for heating the inkjet ink to 40°C or higher in a channel for supplying the inkjet ink to an inkjet head of the coating film forming apparatus.
Thus, the viscosity of the ink at the time of ejection can be reduced. In addition, even when the ink is heated to 40°C or higher, the water content of the ink is low. Thus, the solid generation due to reaction of the blocked isocyanate in the ink with water, a hydroxy group, or the like can be suppressed. This leads to good ejection property of the ink, stable curability of the ink, and coating film performance.
Hereinafter, the present invention and constituent elements thereof, and modes and aspects for carrying out the present invention will be described. In the present description, when two numbers are used to indicate a range of values before and after "to", these numbers are included in the range as the lower limit value and the upper limit value.

1. Overview of Inkjet Ink of Present Invention

The inkjet ink according to the present invention is an inkjet ink containing a polymerizable monomer, a blocked isocyanate, and a photopolymerization initiator, wherein the water content of the inkjet ink measured by the Karl Fischer method is in the range of 0.05 to 0.60% by mass relative to the total mass of the inkjet ink.
In the present invention, the term "(meth)acrylate" means acrylate or methacrylate. The term "(meth)acryloyl

group" means an acryloyl group or a methacryloyl group, and the term "(meth)acrylic" means acrylic or methacrylic.

The ink of the present invention functions as an insulating film (solder resist) by being applied to a substrate and then cured with active light rays in various fields such as metal processing, electronic circuits, printed circuit boards, plate making, the semiconductor field, and color filters. Furthermore, since the ink can be removed with an alkali after photocuring, the ink also functions as an etching resist used for forming an etching pattern on a substrate.

Note that the ink can be used not only as the above-described ink for forming a solder resist pattern but also as an adhesive or sealant for electronic components, a circuit protecting agent, or the like.

In particular, the ink according to the present invention is preferably an ink for forming a solder resist pattern used for a printed wiring board. When a solder resist pattern (solder resist film) is formed using the ink according to the present invention, penetration of oxygen and moisture into the solder resist film can be prevented due to the high curability. Furthermore, the ink according to the present invention can also improve the adhesion at the interface between copper foil and a solder resist film in a printed wiring board, preventing copper migration and suppressing a reduction in insulating properties.

The ink of the present invention is an ink curable by active light rays.

The term "active light rays (also referred to as "active energy rays")" refers to light rays that can impart energy to generate reaction initiating species, such as active radicals and ions, in an ink when the ink is irradiated with the active light rays. Examples of the active energy rays include $\alpha$-rays, $\gamma$-rays, X-rays, ultraviolet rays, and electron beams. Among these, ultraviolet rays and electron beams are preferable, and ultraviolet rays are more preferable, from the viewpoints of curing sensitivity and the availability of equipment.

<Water Content>

The water content of the ink of the present invention as measured by the Karl Fischer method is within the range of 0.05 to 0.60% by mass relative to the total mass of the ink and is more preferably within a range of 0.05 to 0.30% by mass from the viewpoints of the solid generation and the ejection property.

(Measurement Method of Water Content)

The water content according to the present invention can be measured by a known method such as the Karl Fischer method.

The method for measuring the water content by the Karl Fischer method is a method for quantifying the water content in a substance by utilizing the fact that a Karl Fischer reagent containing iodine, sulfur dioxide, and pyridine specifically reacts with water in the presence of methanol. In particular, the volumetric titration method is a method in which a titration solvent is placed in a titration flask, a sample is dissolved in the titration solvent to extract moisture in the sample, and then the moisture is titrated with a Karl Fischer reagent containing iodine, sulfur dioxide, and a base as main components to determine the amount of moisture.

Water reacts with iodine and sulfur dioxide in the presence of a base and an alcohol.

$$H_2O + I_2 + SO_2 + CH_3OH + 3RN \rightarrow 2RN{\bullet}HI + RN{\bullet}HSO_4CH_3$$

From the above formula, since $H_2O$ and $I_2$ react at a ratio of 1:1, the number of milligrams of water (titer) per milliliter of the Karl Fischer reagent is determined in advance using water or a water-standard substance. Then, the amount of moisture (mg) is calculated from the titration amount (ml) of the reagent required for the measurement of the sample.

$$\text{Amount of moisture (mg)} = \text{Karl Fischer reagent titration amount (ml)} \times \text{titer (mgH}_2\text{O/ml)}$$

The Karl Fischer reagent is also referred to as a KF reagent.

Then, the water content relative to the total mass of the ink is calculated from the calculated amount of moisture.

$$\text{Water content (\%)} = (\text{Amount of moisture in ink/Total weight of ink}) \times 100$$

Examples of means for setting the water content within the range of 0.05 to 0.60% by mass include controlling the octanol/water partition coefficient (ClogP) value of the polymerizable monomer contained in the ink and controlling the hydroxy value in the ink. In addition, as other control means for controlling the water content, heating the ink or the like may be mentioned.

The ClogP value of the polymerizable monomer is preferably in the range of 2.0 to 7.0. Furthermore, it is

preferable that the polymerizable monomer having a ClogP value in the range of 2.0 to 7.0 is contained in an amount of 30% by mass or more relative to the total amount of the ink, from the viewpoint of ejection stability.

The hydroxy value of the ink is preferably within a range of 0.05 to 60 mg KOH/g. In order that the hydroxy value in the ink falls within the above-described range, it is preferable to control the charged composition of compounds having hydroxy values to be contained in the ink or purify compounds having hydroxy values. Examples of the compounds having hydroxy values include (meth)acrylate and the like.

2. Configuration of Inkjet Ink

The ink of the present invention contains a polymerizable monomer, a blocked isocyanate, and a photopolymerization initiator. Hereinafter, the polymerizable monomer, the blocked isocyanate, the photopolymerization initiator, and the like will be described.

<Polymerizable monomer>

The polymerizable monomer according to the present invention is a monofunctional (meth)acrylate or a polyfunctional (meth)acrylate.

The monofunctional (meth)acrylate compound is a compound having one (meth)acrylate group in one molecule. Specific examples of the monofunctional (meth)acrylate compound include glycidyl (meth)acrylate, 3,4-epoxycyclohexyl (meth)acrylate, methylglycidyl (meth)acrylate, 3-methyl-3-(meth)acryloxymethyloxetane, 3-ethyl-3-(meth)acryloxymethyloxetane, 3-methyl-3-(meth)acryloxyethyloxetane, 3-ethyl-3-(meth)acryloxyethyloxetane, 2-phenyl-3-(meth)acryloxymethyloxetane, 2-trifluoromethyl-3-(meth)acryloxymethyloxetane, 4-trifluoromethyl-2-(meth)acryloxymethyloxetane, (meth)acrylic acid, methyl (meth)acrylate, ethyl (meth)acrylate, isopropyl (meth)acrylate, butyl (meth)acrylate, iso-butyl (meth)acrylate, t-butyl (meth)acrylate, cyclohexyl (meth)acrylate, benzyl (meth)acrylate, tricyclo [5.2.1.$0^{2,6}$] decanyl (meth)acrylate, dicyclopentenyloxyethyl (meth)acrylate, isobornyl (meth)acrylate, phenyl (meth)acrylate, glycerol mono (meth)acrylate, tetrahydrofurfuryl (meth)acrylate, (meth)acrylates of ethylene oxide adducts of lauryl alcohol, mono [2-(meth)acryloyloxyethyl] succinic acid, mono [2-(meth)acryloyloxyethyl] maleic acid, 2-hydroxyethyl (meth) acrylate, 2-hydroxypropyl (meth)acrylate, 4-hydroxybutyl (meth)acrylate, or 1,4-cyclohexanedimethanol mono (meth) acrylate, n-butyl (meth)acrylate, stearyl (meth)acrylate, lauryl (meth)acrylate, isodecyl (meth)acrylate, tridecyl (meth) acrylate and 2-(2-ethoxyethoxy) ethyl (meth)acrylate.

In the present invention, the "polyfunctional monomer" refers to a compound having two or more functional groups. Examples of the functional group include an acryloyl group, a methacryloyl group, an allyl group, a vinyl group, and a vinyl ester group, each of which has an ethylenically unsaturated bond, from the viewpoint of curing by radical polymerization. Note that the functional group is not limited to those described above.

The polymerizable monomer used in the present invention preferably contains a polyfunctional monomer from the viewpoint of physical properties of the coating film.

Examples of a bifunctional acrylate include triethylene glycol diacrylate, tetraethylene glycol diacrylate, polyethylene glycol diacrylate, dipropylene glycol diacrylate (DPGDA), tripropylene glycol diacrylate, polypropylene glycol diacrylate, 1,4-butanediol diacrylate, 1,6-hexanediol diacrylate, 1,9-nonanediol diacrylate, neopentyl glycol diacrylate, propylene oxide (PO) adduct diacrylate of bisphenol A, hydroxypivalic acid neopentyl glycol diacrylate, polytetramethylene glycol diacrylate, tricyclodecanedimethanol dimethacrylate, and tricyclodecane dimethanol diacrylate.

Examples of the acrylate having three or more functional groups include trimethylolpropane triacrylate, pentaerythritol triacrylate, pentaerythritol tetraacrylate, dipentaerythritol hexaacrylate, ditrimethylolpropane tetraacrylate, glycerolpropoxy triacrylate, and pentaerythritol ethoxy tetraacrylate.

Among the acrylates, phenoxyethyl acrylate, o-phenylphenol acrylate, and 2-hydroxy-3-phenoxypropyl acrylate are preferable from the viewpoint of suppressing curing shrinkage.

From the viewpoint of fast curability, neopentyl glycol diacrylate, tricyclodecane dimethanol diacrylate, PO adduct diacrylate of bisphenol A, and hydroxypivalic acid neopentyl glycol diacrylate are preferable.

The acrylate may be modified.

Examples of the modified acrylate include: ethylene oxide modified acrylates such as ethylene oxide modified trimethylolpropane triacrylate and ethylene oxide modified pentaerythritol tetraacrylate; propylene oxide modified acrylates such as propylene oxide modified trimethylolpropane triacrylate and propylene oxide modified pentaerythritol tetraacrylate; caprolactone modified acrylates such as caprolactone modified trimethylolpropane triacrylate; and caprolactam modified acrylates such as caprolactam modified dipentaerythritol hexaacrylate.

(Polyfunctional (Meth)acrylate having ClogP Value within Range of 2.0 to 7.0)

The ink according to the present invention preferably contains a polymerizable monomer having an octanol/-water partition coefficient (ClogP) value in the range of 2.0 to 7.0. That is, the ink of the present invention preferably contains a polyfunctional (meth)acrylate having a ClogP value in the range of 2.0 to 7.0.
When the ClogP value is in the range of 2.0 to 7.0, an amine derived from the blocked isocyanate hydrolyzed by moisture in the ink or a hydrolysate of the (meth)acrylate reacts with components in the ink to form a reaction product. In addition, since the solubility of the formed reaction product is improved, it is possible to suppress a cured product or a foreign substance from being eluted as a solid, and ejection stability is improved.
Examples of the polyfunctional (meth)acrylate monomer having a ClogP value in the range of 2.0 to 7.0 include 1,6-hexanediol diacrylate (ClogP 3.0) (monomer E described later), EO-modified trimethylolpropane triacrylate (ClogP 4.0), dipropylene glycol diacrylate (ClogP 2.0), propoxylated (2) neopentyl glycol diacrylate (ClogP 4.9), 1,10-decanediol dimethacrylate (ClogP 5.75), tricyclodecanedimethanol diacrylate (ClogP 4.69), and tricyclodecanedimethanol dimethacrylate (ClogP 5.12). In addition, monomers exemplified in Examples which will be described later can also be used.
In addition, it is preferable that a polyfunctional (meth)acrylate monomer having a ClogP in the range of 2.0 to 7.0 is contained in an amount of 30% by mass or more relative to the total amount of the ink, from the viewpoint of ejection stability. In particular, the ink of the present invention preferably contains a polyfunctional (meth)acrylate monomer having a ClogP value in the range of 2.0 to 7.0 in an amount in the range of 30 to 50% by mass relative to the total amount of the ink.
In the present invention, the "ClogP value" is a logP value obtained by calculation.
The ClogP value can be calculated by a fragment method, an atomic approach method, or the like. More specifically, in order to calculate the ClogP value, a fragment method described in the following document or the following commercially available software package 1 or 2 may be used.
Document: C. Hansch and A. Leo, "Substituent Constants for Correlation Analysis in Chemistry and Biology" (John Wiley & Sons, New York, 1969).
Software package 1: MedChem Software (Release 3.54, August 1991, Medicinal Chemistry Project, Pomona College, Claremont, Calif), software package 2: Chem Draw Ultra ver. 20.0.0.47 (PerkinElmer Informatics)
The numerical value of the ClogP value described in the present specification and the like is the "ClogP value" calculated using the software package 2.

(Bisphenol A Structure)

The polyfunctional (meth)acrylate preferably has at least one bisphenol A structure.
The polyfunctional (meth)acrylate monomer having a bisphenol A structure is preferably, for example, the PO adduct diacrylate of bisphenol A described above, EO-modified bisphenol A diacrylate, or bisphenol A-type epoxy acrylate.

(Hydroxy Value)

As described above, the sum of the hydroxy values of compounds having hydroxy groups contained in the ink according to the present invention is preferably 60 mg KOH/g or less, and the lower limit is preferably 0.05 mg KOH/g or more from the viewpoint of adhesion. When the hydroxy values are within the above range, the solid generation is suppressed even when the ink contains water, and the storage stability is excellent.
Examples of means for setting the hydroxy values within the range of 0.05 to 60 mg KOH/g include appropriately selecting compounds having hydroxy values to be contained in the ink, controlling the charged composition of compounds having hydroxy values, and purifying compounds having hydroxy values.
In the present invention, the term "hydroxy values" refers to the amount (mg) of potassium hydroxide (KOH) required to neutralize acetic acid bonded to hydroxy groups when 1 g of the ink of the present invention is acetylated.
The hydroxy values can be calculated according to the method described in JIS K0070-1992 or can be obtained by calculation from the charged composition of compounds having hydroxy groups in 1 g of the ink.
The hydroxy values in the present invention are determined from the charged composition of compounds having hydroxy groups in 1 g of the ink among the above-described calculation methods. The specific calculation method is shown in Equation (a) below.

$$\text{Hydroxy value [mg KOH/g]} = \text{A [mol]} \times \text{(number of hydroxy groups of a compound having hydroxy groups)} \times \text{B [mg/mol]} \quad \text{(a)}$$

In the above Equation (a), "A" represents the number of moles of the compound having hydroxy groups in 1 g of

the ink. Furthermore, "B" represents the molecular weight of 1 mol of potassium hydroxide (56000 [mg/mol]).

When a plurality of types of compounds having hydroxy groups are contained in the ink, the hydroxy value is calculated for each compound having hydroxy groups by Equation (a). The sum of the obtained hydroxyl values is defined as the hydroxyl value in 1 g of the ink.

The compound having hydroxy groups is not particularly limited as long as the compound has hydroxy groups in its structure.

Examples of the hydroxyalkyl (meth)acrylate include 2-hydroxyethyl (meth)acrylate, 2-hydroxypropyl (meth) acrylate, and 4-hydroxybutyl (meth)acrylate.

Examples of the hydroxy (meth)acrylate having a cycloaliphatic structure include 1,4-cyclohexanedimethanol mono(meth)acrylate.

Examples of the epoxy (meth)acrylate include aliphatic alcohol-based epoxy (meth)acrylate, aliphatic polyhydric alcohol-based epoxy (meth)acrylate, and phenol-based epoxy (meth)acrylate. Examples of the epoxy (meth)acrylate also include a polyhydric phenol-based epoxy (meth)acrylate, an alicyclic carboxylic acid-based epoxy acrylate, and an aromatic carboxylic acid-based epoxy (meth)acrylate.

As the epoxy (meth)acrylate, a commercially available product can be used. Examples of the commercially available product include DENACOL ACRYLATE DA-111, DA-141, DA-212, DA-250, DA-314, DA-721, DA-722, DA-911M, DA-920, and DA-931. These commercially available products are all manufactured by Nagase ChemteX Corporation.

These compounds having hydroxy groups may be used alone or in combination of two or more kinds thereof.

In the ink of the present invention, the content of the polymerizable monomer is preferably in a range of 40 to 90% by mass and more preferably in a range of 60 to 85% by mass relative to the total mass of the ink. When the content is within the above range, coating film adhesion is improved.

<Blocked Isocyanate>

The blocked isocyanate is a compound having an isocyanate group, the isocyanate group of which is blocked with a blocking agent. Hereinafter, the compound having an isocyanate group is also referred to as an "isocyanate compound".

The isocyanate group is activated by dissociation of the blocking agent from the blocked isocyanate upon heating.

In the ink of the present invention, the blocked isocyanate has its isocyanate group blocked and is nonreactive until the ink is coated onto a recording medium, thereby providing the ink with storage stability. After coating, when the ink is heated at a temperature equal to or higher than the temperature at which the blocking agent dissociates, the isocyanate group is generated. Then, the isocyanate group reacts with hydroxy groups and/or carboxy groups of the monomer contained in the ink so that the ink is cured to form a coating film.

(Isocyanate Compound)

It is preferable that the isocyanate compound is polyfunctional isocyanate from the viewpoint of curability.

The polyfunctional isocyanate is not particularly limited as long as it is a compound having two or more isocyanate groups in the molecule.

Specific examples of the polyfunctional isocyanate include: aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylene diisocyanate, xylylene diisocyanate (XDI), tetramethylxylylene diisocyanate (TMXDI), tolidine diisocyanate (TODI), and 1,5-naphthalene diisocyanate (NDI); aliphatic polyisocyanates such as hexamethylene diisocyanate (HDI), trimethylhexamethylene diisocyanate (TMHDI), lysine diisocyanate, and norbornane diisocyanate methyl (NBDI); cycloaliphatic polyisocyanates such as trans cyclohexane-1,4-diisocyanate, isophorone diisocyanate (IPDI), H6XDI (hydrogenated XDI), H12MDI (hydrogenated MDI), and H6TDI (hydrogenated TDI); polyisocyanates such as polymethylene polyphenylene polyisocyanate; biuret products, isocyanurate products and carbodiimide-modified products of these.

In the ink of the present invention, any of these isocyanates may be used alone, or two or more kinds thereof may be used in combination.

(Blocking Agent)

As the blocking agent, a known blocking agent can be used.

Examples of the blocking agent include: alcohols such as ethanol, n-propanol, isopropanol, t-butanol, and isobutanol; phenols such as phenol, chlorophenol, cresol, xylenol, and p-nitrophenol; alkylphenols such as p-t-butylphenol, psec-butylphenol, p-sec-aminophenol, p-octylphenol, and p-nonylphenol; basic nitrogen-containing compounds such as 3-hydroxypyridine, 8-hydroxyquinoline, and 8-hydroxyquinaldine; active methylene compounds such as diethyl malonate, ethyl acetoacetate, and acetylacetone; acid amides such as acetamide, acrylamide, and acetanilide; acid imides such as succinic acid imide, maleic acid imide; imidazoles such as 2-ethylimidazole, and 2-ethyl-4-methylimidazole; pyrazoles such as pyrazole, 3-methylpyrazole, and 3,5-dimethylpyrazole; lactams such as 2-pyrrolidone, and ε-caprolactam; oximes of ketones or aldehydes such as acetoxime, methyl ethyl ketone oxime, cyclohexanone oxime, butanone oxime, and acetaldoxime; ethyleneimine; and bisulfite.

The blocking agent is preferably at least one compound selected from the group consisting of an oxime-based compound, a pyrazole-based compound, and an active ethylene-based compound from the viewpoints of ink storability and thermal dissociability.

Examples of the oxime-based compound include formamide oxime, acetaldoxime, acetoxime, methyl ethyl ketone oxime, cyclohexanone oxime, and butanone oxime (MEKO).

Examples of the pyrazole-based compound include pyrazole, 3-methylpyrazole and 3,5-dimethylpyrazole.

Examples of the active ethylene-based compound include dimethyl malonate, diethyl malonate (DEM), methyl acetoacetate, ethyl acetoacetate, and acetylacetone.

Examples of the polyfunctional isocyanate compound having isocyanate groups protected by the blocking agent include 2-[(3,5-dimethylpyrazolyl) carbonylamino] ethyl methacrylate. Examples of the polyfunctional isocyanate compound having isocyanate groups protected by the blocking agent also include 2-[(3-butylidene) aminooxycarbonylamino] ethyl methacrylate. Examples of the polyfunctional isocyanate compound having isocyanate groups protected by the blocking agent further include 2-[(3,5-dimethylpyrazolyl) carbonylamino] ethyl acrylate. Examples of the polyfunctional isocyanate compound having isocyanate groups protected by the blocking agent still further include 2-[(3-butylidene) aminooxycarbonylamino] ethyl acrylate.

It is preferable that the blocked isocyanate has an aromatic ring structure from the viewpoints of ink storability and coating film performance.

The blocked isocyanate having an aromatic ring is not particularly limited, but examples thereof include aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylenediisocyanate, xylylene diisocyanate (XDI), tetramethylxylylene diisocyanate (TMXDI), tolidine diisocyanate (TODI), and 1,5-naphthalene diisocyanate (NDI).

The blocked isocyanate may also contain an aromatic group as a blocking agent, and a blocking agent containing a benzene ring and a blocking agent containing a heteroaromatic ring are preferable. In particular, dimethylpyrazole (DMP) is preferably contained as a blocking agent for the blocked isocyanate containing an aromatic group.

The blocked isocyanate may have a polyisocyanate structure.

Examples of the polyisocyanate structure include three types: isocyanurate, biuret, and adduct. As the blocked isocyanate of the present invention, an isocyanurate type and a biuret type are preferable from the viewpoints of curability and coating film performance, and an isocyanurate type (having an isocyanurate structure) is particularly preferable.

The content of the blocked isocyanate is preferably in a range of 0.1 to 20 parts by mass, and more preferably in a range of 1 to 10 parts by mass, relative to 100 parts by mass of the polymerizable monomer.

When the amount of the blocked isocyanate is 0.1 parts by mass or more, curing by heat becomes sufficient. When the amount of the blocked isocyanate is 20 parts by mass or less, the ink storability at high temperature is excellent.

As the blocking agent, one type may be used alone, two or more types may be used in combination. Multiple types of blocked isocyanates blocked by a single or two or more blocking agents may be used.

Commercially available products of the blocked isocyanate include, for example, BI7774, BI7779, BI7950, BI7960, BI7961, BI7981, BI7982, BI7991, BI7992 (all manufactured by LANXESS), MFK60X (manufactured by Asahi Kasei Chemicals Corporation), VPLS2253, BL4265SN (all manufactured by Sumika Bayer Urethane Co., Ltd.), PU5211, PU5210 (both manufactured by Leeson Polyurethanes), Karenz MOI-BP (2-[(3,5-dimethylpyrazolyl) carbonylamino] ethyl methacrylate), Karenz MOI-BM (2-(0-[1'-methylpropylideneamino] carboxyamino) ethyl methacrylate) (all manufactured by Showa Denko K.K.), and the like.

<Photopolymerization Initiator>

When the polymerizable monomer (polyfunctional (meth)acrylate monomer) is a radically polymerizable compound, a photoradical initiator is preferably used as the photopolymerization initiator according to the present invention. When the polymerizable monomer is a cationically polymerizable compound, a photoacid generator is preferably used as the photopolymerization initiator according to the present invention.

The ink according to the present invention may contain only one type of photopolymerization initiator or two or more types of photopolymerization initiator. The photopolymerization initiator may be a combination of both a photoradical initiator and a photoacid generator.

The photoradical initiator includes a cleavage-type radical initiator and a hydrogen-abstraction-type radical initiator.

Examples of the cleavage-type radical initiator include acetophenone-based initiators, benzoin-based initiators, acylphosphine oxide-based initiators, and benzyl and methylphenyl glyoxy esters.

Examples of the acetophenone-based initiator include diethoxyacetophenone, 2-hydroxy-2-methyl-1-phenylpropan-1-one, benzyl dimethyl ketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexyl-phenylketone, 2-methyl-2-morpholino(4-thiomethylphenyl)propan-1-one and 2-benzyl-2-dimethylamino-1-(4-morpholinophenyl)-butanone.

Examples of the Benzoin-based initiator include Benzoin, benzoin methyl ether, and benzoin isopropyl ether.

Examples of the acylphosphine oxide-based initiator include 2,4,6-trimethylbenzoin diphenylphosphine oxide.

Examples of the hydrogen-abstraction-type radical initiator include a benzophenone-based initiator, a thioxanthone-based initiator, an aminobenzophenone-based initiator, and 10-butyl-2-chloroacridone. Examples of the hydrogen-abstraction-type radical initiator also include 2-ethylanthraquinone, 9,10-phenanthrenequinone, and camphorquinone.

Examples of the benzophenone-based initiator include benzophenone, o-benzoylbenzoic acid methyl-4-phenylbenzophenone, 4,4'-dichlorobenzophenone, and hydroxybenzophenone. Examples of the benzophenone-based initiator also include 4-benzoyl-4'-methyl-diphenyl sulfide, acrylated benzophenone, 3,3',4,4'-tetra (t-butylperoxycarbonyl) benzophenone, and 3,3'-dimethyl-4-methoxybenzophenone.

Examples of the thioxanthone-based initiator include 2-isopropylthioxanthone, 2,4-dimethylthioxanthone, 2,4-diethylthioxanthone, and 2,4-dichlorothioxanthone.

Examples of the aminobenzophenone-based initiator include Michler's ketone and 4,4'-diethylaminobenzophenone.

Examples of the photoacid generator include compounds described in "Organic Materials for Imaging", edited by The Japanese Research Association for Organic Electronics Materials, Bun-Shin Co., Ltd. (1993), pp. 187 to 192.

The content of the photopolymerization initiator may be in a range in which the ink can be sufficiently cured, and can be, for example, in a range of 0.01 to 10% by mass relative to the total mass of the ink of the present invention.

Examples of commercially available products of the photopolymerization initiator include Omnirad TPO, Omnirad 379, and Omnirad TPO (all manufactured by Igm Resins B.V.). Examples of commercially available products of the photopolymerization initiator also include Speedgure ITX (manufactured by Sartomer) and Speedcure EPD (manufactured by Sartomer).

<Polymerization Inhibitor>

It is preferable that the ink of the present invention further contains a polymerization inhibitor. By containing the polymerization inhibitor, the adhesiveness between a plurality of compounds having curability can be reduced.

The "polymerization inhibitor" includes all compounds that are added to inhibit a polymerization reaction during the preparation of the ink containing a polymerizable monomer or during storage after the preparation.

In the present invention, various conventionally known polymerization inhibitors can be used.

It is preferable to contain, as the polymerization inhibitor, any one of an N-oxyl-based polymerization inhibitor, a phenol-based polymerization inhibitor containing an o-t-butyl group, or a polymerization inhibitor having two or more aromatic rings.

Among these, it is more preferable to contain an N-oxyl-based polymerization inhibitor from the viewpoint of adhesion to the printed wiring board.

In the ink of the present invention, the content of the polymerization inhibitor is preferably in a range of 0.05 to 0.5% by mass relative to the total mass of the ink.

(N-oxyl-based Polymerization Inhibitor)

Examples of the N-oxyl-based polymerization inhibitor include 4-hydroxy-2,2,6,6-tetramethylpiperidine-N-oxyl (TEMPO), 4-hydroxy-2,2,6,6-tetramethyl-piperidine-N-oxyl, 4-oxo-2,2,6,6-tetramethyl-piperidine-N-oxyl, 4-methoxy-2,2,6,6-tetramethyl-piperidin-N-oxyl, 4-acetoxy-2,2,6,6-tetramethyl-piperidine-N-oxyl, and Irgastab (registered trade name) UV10 (manufactured by Basf SE).

(Phenol-based Polymerization Inhibitor)

Examples of the phenol-based polymerization inhibitor include 2,6-di-tert-butylphenol, 2,4-di-tert-butylphenol, and 2-tert-butyl 4,6-dimethylphenol. Examples of the phenol-based polymerization inhibitor also include 2,6-di-tert-butyl-4-methylphenol, and 2,4,6-tri-tert-butylphenol. Examples of the phenol-based polymerization inhibitor further

include 2,6-di-t-butyl-p-cresol (butylated hydroxytoluene: BHT), 4-methoxyphenol, and 2-methoxy-4-methylphenol.

(Quinone-based Polymerization Inhibitor)

Examples of a quinone-based polymerization inhibitor include hydroquinone, methoxyhydroquinone, benzoquinone, 1,4-naphthoquinone, and p-tert-butylcatechol.

(Amine-based Polymerization Inhibitor)

Examples of an amine-based polymerization inhibitor include alkylated diphenylamine, N,N'-diphenyl-p-phenylenediamine, and phenothiazine.

(Other Polymerization Inhibitors)

Examples of other polymerization inhibitors include copper dithiocarbamate-based polymerization inhibitors such as copper dimethyldithiocarbamate, copper diethyldithiocarbamate, and copper dibutyldithiocarbamate.

Only one of these may be contained, or two or more of these may be contained.

Among these, N-oxyl-based and quinone-based polymerization inhibitors are preferable. As the inhibitor, 4-hydroxy-2,2,6,6-tetramethylpiperidine-N-oxyl (TEMPO) is preferable. In addition, as the inhibitor, 2,6-di-t-butyl-p-cresol (butylated hydroxytoluene: BHT) and 2,4-di-tert-butylphenol are preferable. As the polymerization inhibitor having two or more aromatic rings, naphthoquinone and the like are preferable.

<Other Components>

(Surfactant)

The ink of the present invention may further contain a surfactant, if necessary.
Examples of the surfactant include an anionic surfactant, a nonionic surfactant, a cationic surfactant, a silicone-based surfactant, and a fluorine-based surfactant.
Examples of the anionic surfactant include dialkyl sulfosuccinates, alkyl naphthalene sulfonates, and fatty acid salts.
Examples of the nonionic surfactant include polyoxyethylene alkyl ethers, polyoxyethylene alkyl allyl ethers, acetylene glycols, and polyoxyethylene-polyoxypropylene block copolymers.
Examples of the cationic surfactant include alkylamine salts and quaternary ammonium salts.

(Coloring Agent)

The ink of the present invention may further contain a coloring agent, if necessary.
The coloring agent may be a pigment or a dye but is preferably a pigment from the viewpoints of having good dispersibility in constituent components of the ink and excellent weather resistance.
The pigment is not particularly limited, and examples thereof include organic pigments or inorganic pigments having the following numbers listed in the Color Index.
The ink of the present invention may contain only one type of coloring agent, may contain two or more types of coloring agent, and may be adjusted to a desired color.
The content of the coloring agent is preferably in a range of 0.1 to 20% by mass and more preferably in a range of 0.2 to 10% by mass relative to the total mass of the ink.

(Pigment)

<<Red or Magenta Pigment>>

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, 36, and mixtures thereof.

<<Blue or Cyan Pigment>>

Examples of blue or cyan pigments include Pigment Blue 1, 15, 15:1, 15:2, 15:3, 15:4, 15:6, 16, 17:1, 22, 27, 28, 29, 36, 60, and mixtures thereof.

<<Green pigment>>

Examples of green pigments include Pigment Green 7, 26, 36, 50, and mixtures thereof.

<<Yellow Pigment>>

Examples of yellow pigments include Pigment Yellow 1, 3, 12, 13, 14, 17, 34, 35, 37, 55, 74, 81, 83, 93, 94, 95, 97, 108, 109, 110, 137, 138, 139, 147, 153, 154, 155, 157, 166, 167, 168, 180, 185, 193, and mixtures thereof.

<<Black Pigment>>

Examples of black pigments include Pigment Black 7, 28, 26, and mixtures thereof.

<<Examples of Commercially Available Pigments>>

Examples of commercially available pigments include black Pigment (manufactured by Mikuni Color Ltd.); Chromofine yellow 2080, 5900, 5930, AF-1300, 2700 L, Chromofine orange 3700L, 6730, Chromofine scarlet 6750, Chromofine Magenta 6880, 6886, 6891N, 6790, 6887, Chromofine violet RE, Chromofine Red 6820, 6830, Chromofine Blue HS-3, 5187, 5108, 5197, 5085N, SR-5020, 5026, 5050, 4920, 4927, 4937, 4824, 4933GN-EP, 4940, 4973, 5205, 5208, 5214, 5221, 5000P, Chromofine green 2GN, 2GO, 2G-550D, 5310, 5370, 6830, Chromofine black A-1103, Seikafast Yellow 10GH, A-3, 2035, 2054, 2200, 2270, 2300, 2400 (B), 2500, 2600, ZAY-260, 2700 (B), 2770, Seikafast red 8040, C405 (F), CA120, LR-116, 1531B, 8060R, 1547, ZAW-262, 1537B, GY, 4R-4016, 3820, 3891, ZA-215, Seikafast Carmine 6B1476T-7, 1483LT, 3840, 3870, Seikafast Bordeaux 10B-430, Seikalight rose R40, Seikalight Violet B800, 7805, Seikafast Maroon 460N, Seikafast orange 900, 2900, Seikalight blue C718, A612, Cyanine blue 4933M, 4933GN-EP, 4940, 4973 (manufactured by Dainichiseika Color & Chemicals Mfg. Co., Ltd., "Chromofine" is a registered trademark of the company); KET Yellow 401, 402, 403, 404, 405, 406, 416, 424, KET Orange 501, KET Red 301, 302, 303, 304, 305, 306, 307, 308, 309, 310, 336, 337, 338, 346, KET Blue 101, 102, 103, 104, 105, 106, 111, 118, 124, KET Green 201 (manufactured by DIC Corporation); Colortex Yellow 301, 314, 315, 316, P-624, 314, U10GN, U3GN, UNN, UA-414, U263, Finecol Yellow, T-13, T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, USN, Colortex Maroon 601, Colortex Brown B610N, Colortex Violet 600, Pigment Red 122, Colortex Blue 516, 517, 518, 519, A818, P-908, 510, Colortex Green 402, 403, Colortex Black 702, U905 (manufactured by Sanyo Color Works, Ltd., "Colortex" and "Finecol" are registered trademarks of the company); Lionol Yellow 1405G, Lionol Blue FG7330, FG7350, FG7400G, FG7405G, ES, ESP-S (manufactured by Toyo Ink Co., Ltd., "Lionol" is a registered trademark of the company); Toner Magenta E02, Permanent Rubin F6B, Toner Yellow HG, Permanent Yellow GG-02, and Hostaperm Blue B2G (manufactured by Hoechst Industries, Ltd.); Novoperm P-HG, Hostaperm Pink E, and Hostaperm Blue B2G (manufactured by Clariant, "Novoperm" and "Hostaperm" are registered trademarks of the company); carbon black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corporation).

<<Dispersion of Pigment>>

The pigment can be dispersed using, for example, a ball mill, a sand mill, an attritor, a roll mill, an agitator, a Henschel mixer, a colloid mill, an ultrasonic homogenizer, a pearl mill, a wet jet mill, or a paint shaker.

The dispersion of the pigment is preferably performed such that the volume average particle diameter of the pigment particles is preferably in a range of 0.08 to 0.5 $\mu$m. Furthermore, it is preferable that the pigment is dispersed such that the maximum particle diameter of the pigment particles is preferably in a range of 0.3 to 10 $\mu$m and more preferably in a range of 0.3 to 3 $\mu$m.

The dispersion of the pigment is adjusted by selection of the pigment, the dispersant, and the dispersion medium, dispersion conditions, filtration conditions, and the like.

<<Dispersant>>

The ink according to the present invention may further contain a dispersant in order to enhance the dispersibility of the pigment.

Examples of the dispersant include hydroxy group-containing carboxylic acid ester, salt of long-chain polyaminoamide and high molecular weight acid ester, salts of high molecular weight polycarboxylic acids, salt of long-chain polyaminoamide and polar acid ester, high molecular weight unsaturated acid ester, high molecular weight copolymers, modified polyurethane, modified polyacrylate, polyether ester type anionic surfactant, naphthalenesulfonic acid formalin condensate salt, aromatic sulfonic acid formalin condensate salt, polyoxyethylene alkyl phosphate ester, polyoxyethylene nonylphenyl ether, and stearylamine acetate. Examples of commercially available products of the dispersant include Solsperse (registered trademark) series manufactured by Avecia Inc. and PB series manufactured by Ajinomoto Fine-Techno Co., Inc.

<<Dispersing Aid>>

The ink according to the present invention may further contain a dispersing aid, if necessary.

The dispersing aid may be selected according to the pigment.

The total content of the dispersant and the dispersing aid is preferably in a range of 1 to 50% by mass relative to the total mass of the pigment.

<<Dispersion Medium>>

The ink according to the present invention may further contain a dispersion medium for dispersing the pigment, if necessary.

Although the ink according to the present invention may contain a solvent as the dispersion medium, the above-described monomer is preferably used as the dispersion medium in order to prevent the solvent from remaining in a formed image. Examples of the above-described monomer include monomers having particularly low viscosity.

In addition, when a solvent is used as the dispersion medium, in a case where the ink is heated from the viewpoint of ejection stability, the solvent is easily volatilized, and the dispersibility of the pigment is easily deteriorated. However, by using the above-described polyfunctional (meth)acrylate monomer, a decrease in the dispersibility of the pigment can be suppressed.

(Other Additives)

The ink of the present invention may further contain a coupling agent, a solvent, and the like, if necessary.

<<Coupling Agent>>

The ink according to the present invention may further contain various coupling agents, if necessary. The inclusion of the coupling agent can improve adhesion to the printed wiring board.

Examples of the various coupling agents include silane-based, titanium-based, and aluminum-based coupling agents.

<<Curing Accelerator>>

In the present invention, a curing accelerator may be contained, if necessary.

Any curing accelerator can be used without particular limitation as long as it accelerates the thermal curing of the resin component.

Examples of the curing accelerator include imidazoles, dicyandiamide derivatives, dicarboxylic acid dihydrazide, triphenylphosphine, and tetraphenylphosphonium tetraphenylborate. Examples of the curing accelerator also include 2-ethyl-4-methyl imidazole-tetraphenyl borate and 1,8-diazabicyclo [5.4.0] undecene-7-tetraphenyl borate.

<<Ion Scavenger>>

In the present invention, an ion scavenger may be contained as necessary.

When the ion scavenger is contained, there are advantages that ionic impurities are adsorbed, and the insulating properties under conditions in which a cured film has absorbed moisture are improved, and the like.

Examples of the ion scavenger include inorganic ion adsorbents such as a triazine thiol compound, a bisphenol-based reducing agent, a zirconium compound, and an antimony bismuth-based magnesium aluminum compound.

<<Flame Retardant>>

In the present invention, a flame retardant may be contained, if necessary.
As the flame retardant, hydrated metal-based flame retardants such as aluminum hydroxide and magnesium hydroxide, red phosphorus, ammonium phosphate, ammonium carbonate, zinc borate, zinc stannate, molybdenum compound-based flame retardants, bromine compound-based flame retardants, and chlorine compound-based flame retardants can be used. As the flame retardant, a phosphate ester, a phosphorus-containing polyol, a phosphorus-containing amine, melamine cyanurate, a melamine compound, a triazine compound, a guanidine compound, a silicon polymer, and the like can also be used.

<<Solvent>>

The ink of the present invention is preferably solvent-free from the viewpoints of fast curability and ejection stability, but a solvent may be added for adjustment of the ink viscosity.

3. Method for Producing Inkjet Ink

The ink of the present invention can be prepared by mixing the above-described polymerizable monomer, the blocked isocyanate, the photopolymerization initiator, and any other components. In addition, it is preferable to filter the obtained mixed liquid through a predetermined filter. Note that when preparing an ink containing a pigment, it is preferable to prepare a pigment dispersion liquid containing the pigment and the polymerizable monomer and then mix the pigment dispersion liquid with the other components. The pigment dispersion liquid may further contain a dispersant.
The pigment dispersion liquid can be prepared by dispersing a pigment in a polymerizable compound.
The pigment can be dispersed using, for example, a ball mill, a sand mill, an attritor, a roll mill, an agitator, a Henschel mixer, a colloid mill, an ultrasonic homogenizer, a pearl mill, a wet jet mill, or a paint shaker. In this step, a dispersant may be added.

4. Method for Storing Inkjet Ink

A method for storing an ink according to the present invention is a method for storing the above-described ink of the present invention, wherein the ink is preferably stored at a temperature in a range of -15 to 40°C and a humidity of 60% RH or less.
Specifically, for storage of the ink within the aforementioned temperature and humidity ranges, the following ink container is preferably used as a container storing the ink of the present invention.

[Ink Container]

The ink of the present invention is preferably contained in a container having a water vapor transmission rate within a range of 0.05 to 1.50 g/$m^2$·day·atm under conditions of 40°C and 90% RH.
Hereinafter, the ink container is also simply referred to as a "container".
The container is a member that is filled with ink and substantially holds the ink.
Examples of the container reflecting one aspect of the present invention include, but are not limited to the following, for example, an ink cartridge, a pack, a bottle, a tank, a jar, and a can. Among these, an ink cartridge, a pack, a bottle, and a tank are preferable, and a pack is more preferable, because they are generally used and the water vapor transmission rate can be easily controlled to a desired value. In addition, the ink of the present invention may be contained in a bottle and then further contained in a pack.
The pack is a container using a flexible film. The pack is preferable in that the pack is lightweight, it is easy to place the pack into any box-like object, the volume of the container is easy to change according to the remaining amount of the ink, and the pack can be processed into a bag-shaped form for use by heat-sealing the film.
Note that modes of use of the container of the present embodiment include at least the following forms (A) to (C).

(A) A form such as an ink cartridge that is separated from an inkjet recording apparatus (coating film apparatus) and is mounted on the recording apparatus to sequentially supply the composition to the recording apparatus
(B) A form that is separated from the recording apparatus and in which only the ink is transferred from the container to the recording apparatus when the ink is used
(C) A form such as a tank that is provided in the recording apparatus in advance and in which the ink is contained

The above-described (A) and (B) can be referred to as an ink container from the time the container is shipped until immediately before the ink is supplied (transferred) to the recording apparatus.

The above-described (C) can be referred to as an ink container from the time the recording apparatus is shipped until before the first use of the ink in the recording apparatus.

The above-described (A) and (C) can be referred to as an ink container for performing printing of the recording apparatus with the ink being supplied from the container to the recording apparatus via a connection section such as an ink tube.

In addition, the above-described (B) can be referred to as an ink container for performing printing of the recording apparatus after the ink is transferred from the container to the recording apparatus. Examples of the target to which the ink is transferred in (B) include a tank provided in the recording apparatus.

Examples of the constituent materials of the container include polyethylene terephthalate (PET), polypropylene (PP), polyethylene, ethylene-vinyl acetate copolymer, ethylene-vinyl alcohol copolymer (EVOH), and polystyrene. Alternatively, the container may be a film of any of these materials.

Further, the container may be formed by mixing the above materials at an appropriate ratio or by layering a plurality of types of the above materials. In the case of a film, the container may be obtained by lamination. When a plurality of types of films is laminated, not all of the plurality of types of films needs to be the above-described films, and some of the films may be films made of other materials, for example, metals and metal compounds.

Furthermore, from the viewpoint of increasing the flexibility of the container, a plasticizer may be contained as a constituent material of the container.

Examples of the plasticizer include fatty acid esters, epoxy compounds, and polyester compounds. Among these, fatty acid esters are preferable from the viewpoint of versatility as plasticizers. Examples of the fatty acid ester include a phthalic acid ester, an adipic acid ester, a trimellitic acid ester, and a citric acid ester. The fatty acid ester is used alone or in combination of two or more types thereof.

The container may be agitated during storage and transportation in order to release sedimentation of the components contained in the ink. This is because after sedimentation of the components contained in the ink, the sediment may cake up and become difficult to release after a long period of time. When the ink is supplied from the container to the recording apparatus, it is preferable to release the sedimentation by agitating the container.

When the container is a container (pack) made of a flexible film, the container needs to be durable to prevent cracking or tearing, especially with agitation operations.

Preferred examples of the film material having good durability include plastic films such as polyethylene terephthalate (PET), polypropylene, polyethylene, ethylene-vinyl acetate copolymer, ethylene-vinyl alcohol copolymer, and polystyrene. The film material is more preferably an ethylene-vinyl acetate copolymer.

Preferred examples of the film also include stretched plastic films such as high-density, low-density, or linear low-density polyethylene, polypropylene, ethylene-vinyl alcohol copolymer, polystyrene, and the like. A laminated film in which a plurality of films is bonded may be used.

In a case where the container is the above-described pack, when the components contained in the ink have settled, the ink may be agitated by shaking the pack from side to side to recover from the settling. In that case, a plasticizer can be contained as a constituent material of the pack from the viewpoint of preventing cracking or tearing of the pack. The plasticizer may be any of those described above and is preferably a fatty acid ester.

When the container is the pack described above, the water vapor transmission rate of the film forming the pack is preferably within a range of 0.05 to 1.50 $g/m^2 \cdot day/atm$ under conditions of 40°C and 90% RH. Furthermore, the water vapor transmission rate is more preferably within a range of 0.05 to 1.00 $g/m^2 \cdot day \cdot atm$, and particularly preferably within a range of 0.05 to 0.5 $g/m^2 \cdot day \cdot atm$.

Use of the film having a water vapor transmission rate within the range of 0.05 to 1.50 $g/m^2 \cdot day \cdot atm$ can suppress an increase in the amount of moisture in the ink filled in the pack even when the pack is stored for a long period of time.

In order to adjust the water vapor transmission rate to 1.50 $g/m^2 \cdot day \cdot atm$ or less, for example, the material constituting the film may be selected, or a layer formed of at least one of a metal or a metallic compound may be provided on the film.

Of these, from the viewpoint of high versatility, it is preferable to provide a layer formed of at least one of a metal or a metal compound.

Examples of the metal include Al and Ti. The metal compound is preferably a metal oxide, and examples thereof include alumina, silica, titania, and zirconia. These are used alone or in combination of two or more types thereof. Note that in the present specification, the metal oxide includes silica.

The thickness of the film forming the pack is preferably within a range of 50 to 200 μm. The lower limit of the thickness of the film is more preferably 70 μm or more, still more preferably 80 μm or more. The upper limit of the film thickness is preferably 150 μm or less, more preferably 130 μm or less. The thickness of the film is the total thickness when the film is a laminated film consisting of a plurality of layers. The thickness of the film within the above range is preferable from the viewpoints of durability and flexibility of the film.

The volume of ink that can be contained in the container is not limited to the following but is preferably in a range of 100 to 5000 mL. The lower limit of the ink volume is preferably 200 mL or more, and more preferably 500 mL or more. The upper limit of the ink volume is preferably 3000 mL or less, more preferably 2000 mL or less, and still more preferably 1000 mL or less. When the volume is within the above range, all of the curability, the storage stability, and the ejection stability can be made more excellent.

5. Solder Resist and Printed Wiring Board

The above-described ink of the present invention is used for a solder resist.
As a method for forming a solder resist pattern, first, patterning is performed by inkjet printing with the ink according to the present invention on an oxide film having conductivity, such as copper or zinc, formed on a substrate.
Next, the ink is cured by light to form a resist film.
Then, a portion of the oxide film that is not covered with the resist film is removed by an acid etching solution.
Furthermore, a fine circuit or pattern can be formed by removing the resist film covering the oxide film with an alkali.
In this way, a printed wiring board having a solder resist is formed.

6. Method for Forming Coating Film

The method for forming a coating film of the present invention is a method for forming a coating film using the inkjet ink, wherein the ink is heated to 40°C or higher in a channel for supplying the ink to an inkjet head of a coating film forming apparatus. That is, the method for forming a coating film includes an ink heating step. The method for forming a coating film preferably includes the following steps (2) to (5) in addition to the ink heating step (1).

(1) A step of heating the ink
(2) A step of deaerating the ink
(3) A step of ejecting the heated ink from nozzles of an inkjet head and landing the ink on a printed wiring board on which a circuit is formed
(4) A step of irradiating the landed ink with active light rays to temporarily cure the ink
(5) After the temporary curing, a step of heating the ink to completely cure the ink

Hereinafter, a method for forming a resist film will be described as an example of the method for forming a coating film.

<Step (1)>

The step (1) is a step of heating the ink. Heating allows ink droplets to be ejected from the inkjet head in a heated state. Thus, the ejection stability can be enhanced.
The temperature of the ink at the time of ejection is preferably 40°C or higher, and the upper limit is preferably 100°C or less. In order to further enhance the ejection stability, the temperature of the ink at the time of ejection is more preferably in a range of 40 to 90°C. In particular, it is preferable to perform ejection at an ink temperature at which the viscosity of the ink is within a range of 7 to 15 mPa·s, and more preferably within a range of 8 to 13 mPa·s.
The ink is preferably heated to a temperature of 40°C or higher at the time of ejection in the channel for supplying the ink to the inkjet head.
As the heating method, for example, it is preferable that at least one of an ink supply system, such as an ink tank of a head carriage, a supply pipe, and a front chamber ink tank immediately in front of the head, a pipe with a filter, and the inkjet head is heated by an ink heating section.
In particular, in the present invention, the heating step is preferably performed a plurality of times before ejection. Specifically, in the ink supply system, it is preferable to perform heating in a first sub-tank that stores the ink. Furthermore, in addition to the heating in the first sub-tank, it is preferable to perform heating in a second sub-tank after deaeration described below and immediately before ejection, or to perform heating in the inkjet head, from the viewpoint of improving the ejection property.
As the ink heating section, a panel heater, a rubber heater, a ribbon heater, warmed water, or the like can be used.

<Step (2)>

The step of (2) is a step of performing deaeration in order to remove air bubbles in the ink.
As the deaeration method, for example, hollow fibers or ultrasonic waves are preferably used.
When the hollow fiber is used, it is preferable to use an external reflux type hollow fiber membrane deaeration

module in which the inside of the hollow fiber membrane is deaerated and the ink flows to the outside of the hollow fiber membrane. As such an external reflux type hollow fiber membrane deaeration module, for example, one described in WO 2022/102058 can be used. In addition, the external reflux type hollow fiber membrane deaeration module is preferable from the viewpoints of deaeration efficiency and a processing flow rate, but the deaeration module is not limited thereto, and other types such as an internal reflux type may be used.

<Step (3)>

In the step of (3), ink droplets are ejected from the inkjet head to be landed on a recording medium, for example, a printed wiring board, at positions corresponding to a resist film to be formed, for patterning.
The ejection method from the inkjet head may be either an on-demand method or a continuous method.
The inkjet head of the on-demand method may be any of an electro-mechanical conversion method such as a single cavity type, a double cavity type, a bender type, a piston type, a shear-mode type, and a shared wall type, and an electro-thermal conversion method such as a thermal inkjet type and a bubble jet type ("bubble jet" is a registered trademark of Canon Inc.).
The droplet amount of ink to be ejected is preferably within a range of 2 to 20 pL in terms of recording speed and image quality.
The printed wiring board is not specifically limited, but is preferably a copper-clad laminate of any grade (e.g., FR-4) using materials such as paper phenol, paper epoxy, glass cloth epoxy, glass polyimide, glass cloth/nonwoven fabric epoxy, glass cloth/ paper epoxy, synthetic fiber epoxy, fluorine, polyethylene, PPO, cyanate ester, and the like for a copper-clad laminate for a high-frequency circuit. The printed wiring board is also preferably a polyimide film, a PET film, a glass substrate, a ceramic substrate, a wafer plate, a stainless-steel plate, or the like.
The printed wiring board is preferably subjected to fine roughening treatment for increasing the contact area with the ink in order to ensure good adhesion with the ink.
When an ink is coated using an inkjet method, it is necessary to lower the viscosity of the ink in order to eject the ink with an inkjet head. Therefore, an ink that includes a polymerizable monomer as a main component before coating and that is cured by active light rays after coating is used. Such an ink tends to undergo curing shrinkage during curing after coating, resulting in poor adhesion between the printed wiring board and the ink. Therefore, in order to increase the contact area with the wiring board, it is necessary to perform fine roughening treatment on the wiring board. In addition, since the viscosity of the ink is low, there is a problem in that bleeding occurs on the roughened wiring board. Therefore, it is preferable to perform treatment for adjusting the contact angle after the roughening treatment of the wiring board.
Therefore, when the ink of the present invention is applied to the above-described use, it is preferable to perform roughening treatment and treatment for preventing bleeding as a pretreatment of the wiring board.
As a method of the roughening treatment, a treatment (physical polishing treatment) of forming unevenness on the surface of the wiring board by means of buffing, scrubbing, or the like to form a rough surface is exemplified. In addition, as another method of the roughening treatment, chemical polishing treatment such as copper chloride-based, persulfate-based, sulfuric acid/hydrogen peroxide, formic acid-based, or organic acid-based polishing treatment may be mentioned.
As the method of the roughening treatment, from the viewpoint of adhesion, a chemical polishing treatment is preferable, and an organic acid-based treatment is more preferable.
Specific examples of the chemical polishing treatment include: MultiPrep 200 manufactured by MacDermid, Inc. for the copper chloride-based; Microclean, ME-301, and PR-820 manufactured by MacDermid, Inc. for the persulfate-based; GB1000F/1400, G200, GB3100, and GB4300 manufactured by Shikoku Chemicals Corporation, Metex G-5, Metex G-6, ME-501, ME-602, ME-605, and ME-709 manufactured by MacDermid, Inc., BTH-2066 manufactured by BOARDTEC, CPE 900, EMR-5000, and EMR-7000 manufactured by Mitsubishi Gas Chemical Company, Inc. for the sulfuric acid/hydrogen peroxide; and CZ8100, CZ8101, and CZ8202 manufactured by MEC Company Ltd., BTH-2083, and BTH-2085 manufactured by BOARDTEC for the organic acid-based.
From the viewpoint of adhesion, the sulfuric acid/hydrogen peroxide-based and the organic acid-based are preferable, and the organic acid-based is more preferable.
As the treatment for preventing bleeding, CZ8300 series manufactured by MEC Company, Ltd. and BTH-3066 manufactured by BOARDTEC are preferable.
As the surface roughness of the copper plate roughened by the above pretreatment, Ra is preferably 0.1 to 1.5 μm, preferably 0.3 to 1.3 μm, and most preferably 0.4 to 1.1 μm. When Ra is 0.1 μm or more, the adhesion is improved, and when the Ra is 1.5 μm or less, the bleeding is suppressed.
The to-be-roughened thickness of the copper plate with the pretreatment agent is preferably 0.1 to 3.0 μm, preferably 0.3 to 2.0 μm, and even more preferably 0.5 to 1.5 μm. When the thickness to be roughened is 0.1 μm or more, the adhesion is improved due to the anchor effect. When the thickness to be roughened is 3.0 μm or less, the adhesion is improved because the copper is not roughened more than necessary.
The surface roughness can be controlled by adjusting conditions such as the type of the pretreatment agent and

the temperature and time of the treatment.

The surface roughness can be measured by a laser microscope, a white light interference microscope or the like.

<Step (4)>

In the step of (4), the ink landed in the step of (3) is irradiated with active light rays for temporary curing.

The active light rays can be selected from, for example, an electron beam, ultraviolet rays, $\alpha$-rays, $\gamma$-rays, and X-rays, but are preferably ultraviolet rays.

The irradiation with ultraviolet rays can be performed under conditions of wavelengths of 300 to 420 nm using, for example, a water-cooled LED manufactured by Phoseon Technology, Inc.

The irradiation with ultraviolet rays is performed such that the peak irradiance of ultraviolet rays having wavelengths in the range of 300 to 420 nm on the resist film surface preferably falls within a range of 0.5 to 10 $W/cm^2$. The irradiation with ultraviolet rays is more preferably performed such that the peak irradiance of the ultraviolet rays on the resist film surface falls within a range of 1 to 5 $W/cm^2$.

From the viewpoint of suppressing the application of radiation heat to the ink, the light amount applied to the resist film is preferably less than 1000 $mJ/cm^2$.

The irradiation with active light rays is preferably performed between 0.001 and 300 seconds after the landing of the ink and is more preferably performed between 0.001 and 60 seconds in order to form a highly precise resist film.

<Step (5)>

In the step of (5), after the temporary curing of (4), the ink is further heated for complete curing.

The heating method is, for example, preferably placing the ink in an oven or the like set within a range of 110 to 180°C for 10 to 60 minutes.

## 7. Coating Film Forming Apparatus

The coating film forming apparatus of the present invention is a coating film forming apparatus including the inkjet ink and includes, in a channel for supplying the ink to an inkjet head, a means (ink heating section) for heating the ink to 40°C or higher.

Hereinafter, the coating film forming apparatus of the present invention will be described in detail with reference to the drawings. However, the scope of the present invention is not limited to the illustrated examples. In the following description, components having the same function and configuration are denoted by the same reference numerals, and the description thereof will be omitted.

Examples of the coating film forming apparatus include an inkjet recording apparatus including an inkjet head.

The inkjet recording apparatus preferably includes an ink heating section, a deaeration device, and an inkjet head.

The inkjet recording apparatus preferably includes an active light ray irradiation section (UV irradiation section) to irradiate the ink landed on a recording medium with active light rays.

FIG. 1 is a diagram illustrating a channel of the ink in the inkjet recording apparatus.

In an inkjet recording apparatus 1, an ink pumped from an ink tank 51 of an ink supply section 50 by a supply pump 53 is supplied to each recording head 24a via an ink channel 24b. Furthermore, the inkjet recording apparatus 1 has a configuration in which an ink that has not been ejected from each recording head 24a can be returned to the ink channel 24b as necessary.

On the ink channel 24b, a first sub-tank 241, a deaeration device 280, a liquid feed pump 243, a check valve 244, a second sub-tank 245, and the like are provided.

The recording head 24a, the ink channel 24b, and the components on the ink channel 24b are heated and kept warm by an ink heating section (ink heating means) 270 so that the temperature of the ink is maintained at an appropriate temperature. To be specific, the ink heating section 270 heats the recording head 24a, the ink channel 24b, and each component on the ink channel 24b so that the ejection temperature of the ink becomes equal to or higher than 40°C.

<Ink Heating Section>

It is preferable that the ink heating section 270 is disposed at least either at the recording head 24a, or, among the components on the ink channel 24b, a place between the first sub-tank 241 and the deaeration device 280 (deaeration module 242) or a place between the deaeration device 280 and the recording head 24a. The ink heating section 270 may also be disposed in the deaeration device 280.

From the viewpoint of preventing the solid generation due to heating, the ink heating section 270 is preferably

disposed at a place between the first sub-tank 241 and the deaeration device 280.

Furthermore, although the ink may be ejected from the recording head 24a immediately after deaeration of the ink, it is preferable to further dispose the ink heating section 270 between the deaeration device 280 and the recording head 24a in order to eject the ink more stably from the viewpoint of preventing an increase in pressure loss.

In the following description, a case where the ink heating sections 270 are disposed in the first sub-tank 241, the second tank 247 between the first sub-tank 241 and the deaeration device 280, and the deaeration device 280 will be described, but the present invention is not limited thereto.

The ink heating section 270 includes a heater, a heat transfer member that transfers heat from the heater, and the like. In addition, the ink heating section 270 may be configured to use heat-retaining water.

As the heater, for example, an electric heating wire is used, which generates Joule heat when energized. Examples of such a heater include a panel heater, a ribbon heater, and a rubber heater. As the heat transfer member, a heat conduction plate formed of a material having a high heat conductivity, such as various metals (alloys), is used.

The heater or the heat transfer member is provided, for example, by covering a pipe of the ink channel 24b or by being in contact with the sidewall of the first sub-tank 241 or the second sub-tank 245.

<First Sub-tank>

The first sub-tank 241 is an ink chamber having a smaller volume than the one or more ink tanks 51 storing the ink.

The first sub-tank 241 includes a first float sensor 241a. A predetermined amount of ink is stored in the first sub-tank 241 by a controller (not illustrated) causing the supply pump 53 to operate based on detection data of the liquid level by the first float sensor 241a.

The first sub-tank 241 is preferably provided with the ink heating section 270. The ink in the first sub-tank 241 is heated by the ink heating section 270, so that the viscosity of the ink at the time of ejection can be adjusted.

The ink heating section 270 preferably heats the ink to a temperature of 40°C or higher at the time of ejection and preferably heats the ink in the first sub-tank 241 to a temperature of 40 to 60°C.

It is preferable that the ink heating section 270 is provided in contact with the sidewall, the bottom wall, or the like of the first sub-tank 241.

Temperature control of the ink heating section 270 is performed by the controller (not illustrated).

The controller performs on/off control with a value appropriately set as a target temperature according to the type of liquid, while detecting the temperature of the ink heating section 270 by, for example, a thermocouple built into the ink heating section 270.

<Deaeration Device>

The deaeration device 280 performs a deaeration process for removing air and other gases from the ink that has flowed in and discharges the deaerated ink.

The deaeration device preferably has a configuration using a hollow fiber membrane or ultrasound. The deaeration device using the deaeration device using the hollow fiber membrane is described below.

(Deaeration Device using Hollow Fiber Membrane)

The deaeration device 280 includes a deaeration module 242, a vacuum pump 249, a vacuum path 250, a pressure sensor 251, an atmosphere release valve 252, and the like.

The deaeration module 242 is an external reflux type deaeration module having a hollow fiber membrane 2426 inside as a gas permeable membrane capable of permeating a dissolved gas in a liquid.

The vacuum pump 249, the vacuum path 250, the pressure sensor 251, and the atmosphere release valve 252 are connected to the deaeration module 242.

The vacuum pump 249 reduces the atmospheric pressure in the deaeration module 242.

The vacuum path 250 connects the vacuum pump 249 to the deaeration module 242.

The pressure sensor 251 measures the atmospheric pressure in the vacuum path 250.

The atmosphere release valve 252 is a valve capable of switching the vacuum path 250 between a sealed state and an atmosphere open state.

The deaeration module 242 of the deaeration device 280 will be described in detail with reference to FIG. 2. In the example illustrated in FIG. 2, the deaeration module 242 of an external reflux type is illustrated.

The deaeration module 242 is formed in, for example, a cylindrical shape, removes (deaerates) a dissolved gas in the ink that has flowed in, and ejects the deaerated ink.

The deaeration module 242 includes a number of hollow fiber membranes (gas permeable membranes) 2426 covering around a central tube 2424 inside an outer shell (chamber) 2421. One end of the central tube 2424 is connected to

an ink inlet 2422, and the other end is sealed with a plug 2424a.

The outer wall of the central tube 2424 has numerous fine holes (holes) 2424b (stitch holes). The ink flowing in through the ink inlet 2422 flows out through these fine holes 2424b to the surrounding region and out through an ink outlet 2423.

Note that, in the example illustrated in FIG. 2, the ink outlet 2423 is provided sideways so that the ink flows out toward the side of the deaeration module 242. However, the present invention is not limited to this configuration, and the ink outlet 2423 may be provided in any direction so that the ink flows out in any direction. Furthermore, providing the ink outlet 2423 at a position corresponding to the upper end portions of the hollow fiber membranes 2426 as illustrated in FIG. 2 is preferable because this prevents an air pocket from forming within the chamber.

The hollow fiber membranes 2426 have numerous hollow fine fiber structures with one end closed, and their membrane surfaces have gas permeability. The other end of the fine fiber structures of the hollow fiber membranes 2426 is connected to a gas outlet 2425 to which the vacuum path 250 is connected. The vacuum pump 249 reduces the pressure inside the hollow fiber membranes 2426 by suction. When the ink contacts the membrane surfaces of the hollow fiber membranes 2426 in this state, only a dissolved gas in the ink selectively permeates the membrane surfaces and the ink is deaerated. The dissolved gas that has passed through the hollow fiber membranes 2426 flows down the vacuum path 250.

FIG. 3A is a schematic cross-sectional view of the internal configuration of the central tube of the external reflux type deaeration module. FIG. 3B is a cross-sectional view taken along the line IVB-IVB in FIG. 3A.

The deaeration module 252 preferably includes a heating section 2427 (ink heating section) inside the central tube 2424.

The heating section 2427 includes, for example, an electric heating wire and a thermocouple inside a bar-like member made of SUS.

Thus, since the heating section 2427 is disposed at the central portion in the deaeration module 242, the ink in the deaeration module 242 can be uniformly and efficiently heated, and the ink can be heated to a target temperature in a short time. In addition, since the entire ink in the deaeration module 242 can be uniformly heated, it is possible to prevent a region in which the ink is not locally heated from being generated in a corner of the deaeration module 242. Thus, since it is possible to uniformly and efficiently heat the ink, it is possible to improve the deaeration efficiency and the liquid feeding amount of the ink, to sufficiently decrease the viscosity of the ink, and to suppress the occurrence of non-ejection of the ink.

Temperature control of the heating section 2427 is performed by the controller.

The controller performs on/off control with a value appropriately set as a target temperature according to the type of liquid, while detecting the temperature of the heating section 2427 by, for example, the thermocouple built into the heating section 2427.

Note that the heating section 2427 may have any shape and configuration as long as the ink in the deaeration module 242 can be heated and the heating temperature can be controlled. Further, the shape and configuration of the heating section 2427 may be such that the heating section 2427 itself generates heat as described above. The heating section 2427 may have, for example, a configuration in which a heat generator itself is provided outside the deaeration module 242 and the heat of the heat generator is transferred to the heating section 2427 to heat the inside of the deaeration module 242.

Furthermore, a second heating section 2428 (ink heating section) to heat the liquid in the deaeration module 242 is provided on the outer surface of the deaeration module 242.

That is, the second heating section 2428 is formed in a planar shape and is provided so as to cover the outer periphery surface of the outer shell 2421 of the deaeration module 242. As such a second heating section 2428, for example, a rubber heater or the like is used.

The second heating section 2428 includes a temperature sensor such as a thermistor (not illustrated) and is controlled on/off by the controller in the same manner as the heating section 2427. Since such a second heating section 2428 is provided, the ink in the deaeration module can be heated to a target temperature in an even shorter time.

The vacuum pump 249 illustrated in FIG. 1 is a diaphragm pump including a pump chamber and a drive source.

The pump chamber includes an expandable diaphragm.

The drive source operates the diaphragm so that the volume of the pump chamber expands and contracts.

The pump chamber includes a suction port having a check valve that allows only inflow of a fluid from the outside and a discharge port having a check valve that allows only discharge of a fluid from the inside.

The pressure sensor 251 detects the atmospheric pressure in the vacuum path 250 and outputs the detection result to the controller. The controller drives and controls the vacuum pump 249 based on the detection result from the pressure sensor 251.

The atmosphere release valve 252 is a solenoid valve capable of switching the vacuum path 250 between the sealed state and the atmosphere open state in accordance with an operation command from the controller.

The liquid feed pump 243 feeds the ink that has flowed out of the ink outlet 2423 of the deaeration module 242 to the second sub-tank 245. The check valve 244 is provided between the liquid feed pump 243 and the second sub-tank 245 to prevent the ink once fed to the second sub-tank 245 from flowing back.

Note that although the deaeration module 242 described above is an external reflux type hollow fiber membrane deaeration module from the viewpoint that the deaeration efficiency and processing flow rate are preferable, the deaeration module 242 is not limited to this and other types such as an internal reflux type may be used.

In addition, as the external reflux type hollow fiber deaeration module, a commercially available product can also be used. Examples of the commercially available product include SEPAREL EF-002A-P and SEPAREL EF-004P manufactured by Dainippon Ink and Chemicals, Inc.

<Second Sub-tank>

The second sub-tank 245 is a small ink chamber that temporarily stores the ink that has been deaerated by the deaeration device 280. The second sub-tank is not particularly limited but has substantially the same volume as the first sub-tank 241.

The second sub-tank 245 is connected to an inlet 240a of each recording head 24a, and the ink corresponding to the amount ejected from the nozzles is supplied to the recording head 24a.

The second sub-tank 245 includes a second float sensor 245a. A predetermined amount of ink is stored by the controller causing the liquid feed pump 243 to operate based on detection data of the liquid level by the second float sensor 245a.

Similarly to the first sub-tank 241, the second sub-tank 245 is preferably provided with the ink heating section 270. The ink in the second sub-tank 247 is heated by the ink heating section 270, so that the viscosity of the ink at the time of ejection can be adjusted.

The ink heating section 270 preferably heats the ink to a temperature of 40°C or higher at the time of ejection and preferably heats the ink in the second sub-tank 247 to a temperature of 40 to 60°C.

It is preferable that the ink heating section 270 is provided in contact with the sidewall, the bottom wall, or the like of the second sub-tank 247.

Temperature control of the ink heating section 270 is performed by the controller.

The controller performs on/off control with a value appropriately set as a target temperature according to the type of liquid, while detecting the temperature of the ink heating section 270 by, for example, a thermocouple built into the ink heating section 270.

The ink that has not been ejected from the nozzles of the recording head 24a can be returned from an outlet 240b to the first sub-tank 241 via a collection path 241b and a valve 241c. For example, when the ink needs to be removed from the ink channel 24b for maintenance of the recording head 24a or the like, the ink in the recording head 24a can be collected without being discarded by opening the valve 241c.

The controller controls the operation of each component of the inkjet recording apparatus 1 and supervises the overall operation. The controller includes a central processing unit (CPU), a read-only memory (ROM), a random-access memory (RAM), and the like.

In the controller, various processing programs such as system programs stored in the ROM are read and developed in the RAM, and the programs developed in the RAM are executed by the CPU. Thus, for example, various control processes such as an image formation process and the above-described temperature control are executed.

In the inkjet recording apparatus having the above-described configuration, the ink in the ink path 24b is heated and kept warm by the ink heating section 270 and is set to have an ink temperature of 40°C or higher when ejected from the recording head.

Note that in the inkjet recording apparatus 1 described above, the ink heating sections 270 are disposed in the first sub-tank 241, the second sub-tank 247, and the deaeration module 242, but the present invention is not limited to this, and the ink heating section 270 may be disposed before the first sub-tank 241. Further, the ink heating section 270 may be provided by having a heater built into the recording head 24a.

Furthermore, although the deaeration device 280 is disposed after the first sub-tank 241 and performs deaeration after heating, the present invention is not limited to this and the deaeration device 280 may be disposed before the first sub-tank 241 and perform deaeration before heating.

Note that the ink ejected from the nozzles is irradiated with active light rays by an active light ray irradiation section.

The active light ray irradiation section includes, for example, a fluorescent tube, such as a low-pressure mercury lamp, and irradiates energy rays such as ultraviolet rays by causing the fluorescent tube to emit light.

Examples of the fluorescent tube that emits ultraviolet rays include, in addition to a low-pressure mercury lamp, a mercury lamp having an operating pressure of about several hundred Pa to 1 MPa. Examples of the fluorescent tube also include a light source usable as a germicidal lamp, a cold-cathode tube, an ultraviolet laser light source, a metal halide lamp, and a light-emitting diode. Among these, a light source (for example, a light-emitting diode or the like) capable of emitting ultraviolet rays with higher irradiance and having low power consumption is more desirable. In addition, the energy rays are not limited to the ultraviolet rays and may be energy rays having a property of curing the ink according to the

property of the ink, and the light source is also replaced according to the wavelength of the energy rays.

Examples

Hereinafter, the present invention will be specifically described with Examples, but the present invention is not limited thereto. Note that in the following Examples, operations were performed at room temperature (25°C) unless otherwise specified. Further, unless otherwise specified, "%" and "parts" mean "% by mass" and "parts by mass", respectively.

<Preparation of Yellow Pigment Dispersion>

The following dispersant 1 and dispersant 2 and a dispersion medium were placed in a stainless steel beaker, heated on a hot plate at 63°C for 1 hour while stirring and dissolving, and then cooled to room temperature. Thereafter, the following pigment was added thereto, and the mixture was placed in a glass bottle together with 200 g of zirconia beads having a diameter of 0.5 mm and the glass bottle was sealed tightly. This was subjected to a dispersion treatment with a paint shaker until a desired particle diameter was obtained, and then the zirconia beads were removed.

Dispersant 1: 5.5 parts by mass of EFKA 7701 (manufactured by Basf SE)
Dispersant 2: 0.35 parts by mass of Solsperse 22000 (manufactured by The Lubrizol Corporation)
Dispersion medium: 78.6 parts by mass of dipropylene glycol diacrylate (containing 0.2% UV-10)
Pigment: 12.2 parts by mass of PY147 (pigment yellow 147) (Oracet (R) Yellow 140 manufactured by Basf SE)

<Preparation of Cyan Pigment Dispersion>

A cyan pigment dispersion was prepared in the same manner as in the preparation of the above yellow pigment dispersion except that the dispersant, the dispersion medium, and the pigment were changed as shown below.

Dispersant: 7.2 parts by mass of EFKA 7701 (manufactured by Basf SE)
Dispersion medium: 73 parts by mass of dipropylene glycol diacrylate (containing 0.2% UV-10)
Pigment: 21 parts by mass of PB15:4 (pigment blue 15:4) (manufactured by Dainichiseika Color & Chemicals Mfg. Co., Ltd., Chromofine Blue 6332JC)

<Blocked Isocyanate>

As the blocked isocyanate, those shown in Table I below were used.

In Table I, "HDI Trimer" is $C_{24}H_{36}N_6O_6$ and has an isocyanurate structure.

The isocyanate compound "TDI" is toluene isocyanate, which is an aromatic diisocyanate.

The "IPDI" of the isocyanate compound is isophorone diisocyanate. The "IPDI Adduct" is an adduct and is a bifunctional or higher isocyanate compound obtained by reacting an isocyanate monomer with a bifunctional or higher low-molecular-weight active hydrogen-containing compound (such as alcohol).

The "Cashew oil" of the blocking agent is a phenolic blocking agent derived from cashew oil.

The "DMP" of the blocking agent is dimethylpyrazole and has an aromatic ring structure.

The "ε-Cap" of the blocking agent is ε-caprolactam.

Note that in the following Table III and subsequent Tables, "Trixene BI7774", "Trixene BI7981", "Trixene BI7960", "Trixene BI7982", and "Trixene BI7950" were expressed as "BI7774", "BI7981", "BI7960", "BI7982", and "BI7950", respectively.

[Table 1]

TABLE I

| | PRODUCT NAME | NAME | COMPANY NAME | ISOCYANATE COMPOUND | BLOCKING AGENT |
|---|---|---|---|---|---|
| | Trixene BI7774 | TOLYLENE DIISOCYANATE | LANXESS | TDI | Cashew oil |

(continued)

| | PRODUCT NAME | NAME | COMPANY NAME | ISOCYANATE COMPOUND | BLOCKING AGENT |
|---|---|---|---|---|---|
| POLYFUNCTIONAL BLOCKED ISOCYANATE | Trixene BI7981 | HEXAMETHYLENE DIISOCYANATE TRIMER | LANXESS | HDI Trimer | ε-Cap |
| | | | | | |
| | Trixene BI7960 | HEXAMETHYLENE DIISOCYANATE BIURET | LANXESS | HDI Biuret | DMP |
| | Trixene BI7982 | HEXAMETHYLENE DIISOCYANATE TRIMER | LANXESS | HDI Trimer | DMP |
| | Trixene BI7950 | ISOPHORONE DIISICYANATE TRIMER | LANXESS | IPDI Adduct | DMP |
| | KARENZ MOI-BP | 2-[(3,5-DIMETHYLPYRAZOLYL) CARBONYLAMINO] ETHYL METHACRYLATE | SHOWA DENKO | - | DMP |

<Photopolymerizable Monomer>

As the photopolymerizable monomer, those listed in the following Table II and the following monomers A to G were used.

[Table 2]

TABLE II

| | | PRODUCT NAME | COMPANY NAME | NAME, ETC. |
|---|---|---|---|---|
| POLYMERIZABLE MONOMER | (METH) ACRYLATE | HDDA | OSAKA ORGANIC CHEMICAL INDUSTRY | 1,6-HEXANEDIOL DIACRYLATE |
| | | DPGDA | DAICEL-ALLNEX | DIPROPYLENE GLYCOL DIACRYLATE |
| | | 4HBA | OSAKA ORGANIC CHEMICAL INDUSTRY | 4-HYDROXYBUTYL ACRYLATE, WEIGHT AVERAGE MOLECULAR WEIGHT Mw: 144 |
| | | TMP-3 | DKS | EO-MODIFIED TRIMETHYLOLPROPANE TRIACRYLATE |
| | ACRYLATE CONTAINING BISPHENOL A STRUCTURE | EBECRYL 150 | DAICEL-ALLNEX | EO-MODIFIED BISPHENOL A DIACRYLATE |
| | | A-BPE-4A | SHIN-NAKAMURA CHEMICAL | EO-MODIFIED BISPHENOL A DIACRYLATE |
| | | EA-1010LC | SHIN-NAKAMURA CHEMICAL | BISPHENOL A EPOXY RESIN CONTAINING (METH)ACRYLOYL GROUP (MONOFUNCTIONAL) |

[Chemical Formula 1]

| MONOMER | CLogP | STRUCTURE |
|---|---|---|
| A | 2.17 | 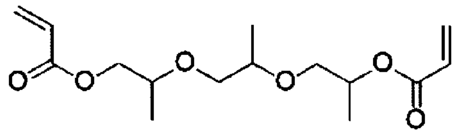 |
| B | 1.86 | 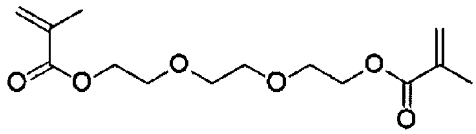 |
| C | 1.52 | 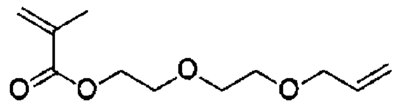 |
| D | 4.9 | 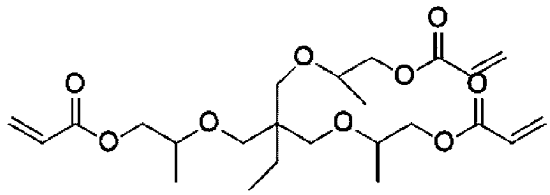 |
| E | 3.02 | 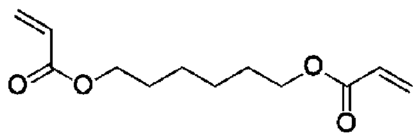 |
| F | 6.81 | 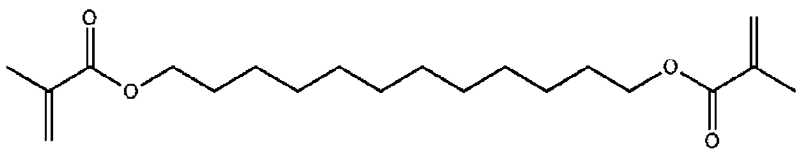 |
| G | 7.34 | 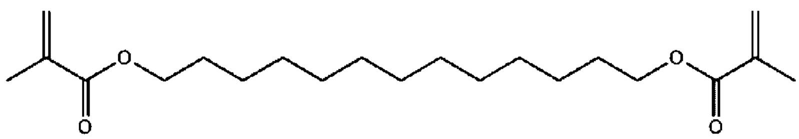 |

<Photopolymerization Initiator>

The following was used as the photopolymerization initiator.

- Omnirad 379EG (manufactured by Igm Resins B.V.)
- Omnirad TPO H (manufactured by Igm Resins B.V.)
- Speedcure 2-ITX (manufactured by Sartomer, 2-isopropylthioxanthone)

<Other Additives>

- Melamine

<Preparation of Inkjet Ink>

The components were mixed according to the ink compositions described in the following Tables III to IX. The

mixed solutions were filtered through a Teflon (registered trademark) membrane filter having a pore size of 3 μm (manufactured by ADVANTEC) while heated to 40°C to prepare inks 1 to 29 and inks 101 to 107.

<Water Content of Ink>

For the prepared inks, the water content of the inks 1 to 21 and 101 to 107 was measured after preparation. After preparation, the ink 22 was dehydrated with magnesium sulfate and filtered, and then the water content of the ink 22 was measured. After preparation, the inks 23 to 29 were stored under an environment of 30°C and 90% for several days to adjust the water content to the values shown in the following tables.

The water content was measured with a Karl Fischer moisture meter (MKV-710, manufactured by Kyoto Electronics Manufacturing Co., Ltd.). Details of the method for calculating the water content are as described above.

[Table 3]

TABLE III

| INK NO. | | 1 | 2 | 3 | 4 | 5 | 6 |
|---|---|---|---|---|---|---|---|
| BLOCKED ISOCYANATE [PARTS BY MASS] | BI7774 | 15 | - | - | - | - | - |
| | BI7981 | - | 15 | - | - | - | - |
| | BI 7960 | - | - | 15 | - | - | - |
| | BI7982 | - | - | - | 15 | - | - |
| | BI7950 | - | - | - | - | 15 | - |
| | MOIBP | - | - | - | - | - | 15 |
| (METH)ACRYLATE [PARTS BY MASS] | 1,6-HEXANEDIOL DIACRYLATE | 20 | 20 | 20 | 20 | 20 | 20 |
| | DIPROPYLENE GLYCOL DIACRYLATE | 50.7 | 50.7 | 50.7 | 50.7 | 50.7 | 50.7 |
| | 4-HYDROXYBUTYL ACRYLATE | - | - | - | - | - | - |
| | EO-MODIFIED TRIMETHYLOLPROPANE TRIACRYLATE | 5 | 5 | 5 | 5 | 5 | 5 |
| ACRYLATE CONTAINING BISPHENOL A STRUCTURE [PARTS BY MASS] | EBECRYL 150 | - | - | - | - | - | - |
| | A-BPE-4 | - | - | - | - | - | - |
| | EA-1010LC | - | - | - | - | - | - |
| PHOTOPOLYMERIZATION INITIATOR [PARTS BY MASS] | Omnirad 379 | 3.6 | 3.6 | 3.6 | 3.6 | 3.6 | 3.6 |
| | TPO | 4.8 | 4.8 | 4.8 | 4.8 | 4.8 | 4.8 |
| | ITX | 0.3 | 0.3 | 0.3 | 0.3 | 0.3 | 0.3 |
| OTHER ADDITIVES [PARTS BY MASS] | MELAMINE | - | - | - | - | - | - |
| PIGMENT [PARTS BY MASS] | pigment blue 15:4 | 0.2 | 0.2 | 0.2 | 0.2 | 0.2 | 0.2 |
| | pigment yellow 147 | 0.4 | 0.4 | 0.4 | 0.4 | 0.4 | 0.4 |
| WATER CONTENT [%] | | 0.22 | 0.24 | 0.23 | 0.25 | 0.23 | 0.24 |

[Table 4]

TABLE IV

| INK NO. | | 7 | 8 | 9 | 10 | 11 | 12 |
|---|---|---|---|---|---|---|---|
| BLOCKED ISOCYANATE [PARTS BY MASS] | BI7774 | - | - | - | - | - | - |
| | BI7981 | - | - | - | - | - | - |
| | BI 7960 | - | - | - | - | - | - |
| | BI7982 | 15 | 5 | 5 | 35 | 15 | 15 |
| | BI7950 | - | - | - | - | - | - |
| | MOIBP | - | - | - | - | - | - |
| (METH)ACRYLATE [PARTS BY MASS] | 1,6-HEXANEDIOL DIACRYLATE | 20 | 20 | 20 | 20 | 20 | 20 |
| | DIPROPYLENE GLYCOL DIACRYLATE | 50.7 | 60.7 | 60.4 | 30.7 | 30.7 | 35.7 |
| | 4-HYDROXYBUTYL ACRYLATE | 5 | - | - | - | - | - |
| | EO-MODIFIED TRIMETHYLOLPROPANE TRIACRYLATE | - | 5 | 5 | 5 | 5 | - |
| ACRYLATE CONTAINING BISPHENOL A STRUCTURE [PARTS BY MASS] | EBECRYL 150 | - | - | - | - | 20 | - |
| | A-BPE-4 | - | - | - | - | - | 20 |
| | EA-1010LC | - | - | - | - | - | - |
| PHOTOPOLYMERIZATION INITIATOR [PARTS BY MASS] | Omnirad 379 | 3.6 | 3.6 | 3.6 | 3.6 | 3.6 | 3.6 |
| | TPO | 4.8 | 4.8 | 4.8 | 4.8 | 4.8 | 4.8 |
| | ITX | 0.3 | 0.3 | 0.3 | 0.3 | 0.3 | 0.3 |
| OTHER ADDITIVES [PARTS BY MASS] | MELAMINE | - | - | 0.3 | - | - | - |
| PIGMENT [PARTS BY MASS] | pigment blue 15:4 | 0.2 | 0.2 | 0.2 | 0.2 | 0.2 | 0.2 |
| | pigment yellow 147 | 0.4 | 0.4 | 0.4 | 0.4 | 0.4 | 0.4 |
| WATER CONTENT [%] | | 0.23 | 0.25 | 0.22 | 0.23 | 0.25 | 0.23 |

[Table 5]

TABLE V

| INK NO. | | 13 | 14 | 15 | 16 | 17 | 18 |
|---|---|---|---|---|---|---|---|
| BLOCKED ISOCYANATE [PARTS BY MASS] | BI7774 | - | - | - | - | - | - |
| | BI7981 | - | - | - | - | - | - |
| | BI 7960 | - | - | - | - | - | - |
| | BI7982 | 15 | 15 | 15 | 15 | 15 | 20 |
| | BI7950 | - | - | - | - | - | - |
| | MOIBP | - | - | - | - | - | - |

(continued)

| INK NO. | | 13 | 14 | 15 | 16 | 17 | 18 |
|---|---|---|---|---|---|---|---|
| (METH)ACRYLATE [PARTS BY MASS] | 1,6-HEXANEDIOL DIACRYLATE | 20 | 20 | 20 | 20 | 20 | 49.7 |
| | DIPROPYLENE GLYCOL DIACRYLATE | 29.2 | 39.2 | 38.7 | 33.2 | 32.9 | 20 |
| | 4-HYDROXYBUTYL ACRYLATE | 6.5 | 6.5 | - | - | - | - |
| | EO-MODIFIED TRIMETHYLOLPROPANE TRIACRYLATE | - | - | 6.5 | 6.5 | 6.5 | - |
| ACRYLATE CONTAINING BISPHENOL A STRUCTURE [PARTS BY MASS] | EBECRYL 150 | - | 5 | 10 | - | - | - |
| | A-BPE-4 | - | - | 0.5 | 1 | 1 | 1 |
| | EA-1010LC | 20 | 5 | - | 15 | 15 | - |
| PHOTOPOLYMERIZATION INITIATOR [PARTS BY MASS] | Omnirad 379 | 3.6 | 3.6 | 3.6 | 3.6 | 3.6 | 3.6 |
| | TPO | 4.8 | 4.8 | 4.8 | 4.8 | 4.8 | 4.8 |
| | ITX | 0.3 | 0.3 | 0.3 | 0.3 | 0.3 | 0.3 |
| OTHER ADDITIVES [PARTS BY MASS] | MELAMINE | - | - | - | - | 0.3 | - |
| PIGMENT [PARTS BY MASS] | pigment blue 15:4 | 0.2 | 0.2 | 0.2 | 0.2 | 0.2 | 0.2 |
| | pigment yellow 147 | 0.4 | 0.4 | 0.4 | 0.4 | 0.4 | 0.4 |
| WATER CONTENT [%] | | 0.22 | 0.24 | 0.23 | 0.24 | 0.23 | 0.23 |

[Table 6]

TABLE VI

| INK NO. | | 19 | 20 | 21 | 22 | 23 | 24 |
|---|---|---|---|---|---|---|---|
| BLOCKED ISOCYANATE [PARTS BY MASS] | BI7774 | - | - | - | - | - | - |
| | BI7981 | - | - | - | - | - | - |
| | BI 7960 | - | - | - | - | - | - |
| | BI7982 | 20 | 20 | 20 | 20 | 20 | 20 |
| | BI7950 | - | - | - | - | - | - |
| | MOIBP | - | - | - | - | - | - |
| (METH)ACRYLATE [PARTS BY MASS] | 1,6-HEXANEDIOL DIACRYLATE | 38.7 | 31.7 | 32.7 | 20 | 20 | 20 |
| | DIPROPYLENE GLYCOL DIACRYLATE | 2C | 20 | 20 | 45.7 | 45.7 | 45.7 |
| | 4-HYDROXYBUTYL ACRYLATE | 6 | 12 | 15 | - | - | - |
| | EO-MODIFIED TRIMETHYLOLPROPANE TRIACRYLATE | - | - | - | 5 | 5 | 5 |

(continued)

| INK NO. | | 19 | 20 | 21 | 22 | 23 | 24 |
|---|---|---|---|---|---|---|---|
| ACRYLATE CONTAINING BISPHENOL A STRUCTURE [PARTS BY MASS] | EBECRYL 150 | - | - | - | - | - | - |
| | A-BPE-4 | 6 | 7 | 3 | - | - | - |
| | EA-1010LC | - | - | - | - | - | - |
| PHOTOPOLYMERIZATION INITIATOR [PARTS BY MASS] | Omnirad 379 | 3.6 | 3.6 | 3.6 | 3.6 | 3.6 | 3.6 |
| | TPO | 4.8 | 4.8 | 4.8 | 4.8 | 4.8 | 4.8 |
| | ITX | 0.3 | 0.3 | 0.3 | 0.3 | 0.3 | 0.3 |
| OTHER ADDITIVES [PARTS BY MASS] | MELAMINE | - | - | - | - | - | - |
| PIGMENT [PARTS BY MASS] | pigment blue 15:4 | 0.2 | 0.2 | 0.2 | 0.2 | 0.2 | 0.2 |
| | pigment yellow 147 | 0.4 | 0.4 | 0.4 | 0.4 | 0.4 | 0.4 |
| WATER CONTENT [%] | | 0.25 | 0.22 | 0.24 | 0.05 | 0.50 | 0.57 |

[Table 7]

TABLE VII

| INK NO. | | 25 | 26 | 27 | 28 | 29 |
|---|---|---|---|---|---|---|
| BLOCKED ISOCYANATE [PARTS BY MASS] | BI7774 | - | - | - | - | - |
| | BI7981 | - | - | - | - | - |
| | BI 7960 | - | - | - | - | - |
| | BI7982 | 20 | 20 | 5 | 5 | - |
| | BI7950 | - | - | - | - | - |
| | MOIBP | - | - | - | - | - |
| (METH)ACRYLATE [PARTS BY MASS] | 1,6-HEXANEDIOL DIACRYLATE | 20 | 20 | 20 | 20 | 20 |
| | DIPROPYLENE GLYCOL DIACRYLATE | 35.7 | 35.7 | 50.7 | 50.7 | 55.7 |
| | 4-HYDROXYBUTYL ACRYLATE | - | - | - | - | - |
| | EO-MODIFIED TRIMETHYLOLPROPANE TRIACRYLATE | 5 | 5 | 5 | 5 | 5 |
| ACRYLATE CONTAINING BISPHENOL A STRUCTURE [PARTS BY MASS] | EBECRYL 150 | - | - | - | - | - |
| | A-BPE-4 | 1C | 10 | 10 | 10 | 10 |
| | EA-1010LC | - | - | - | - | - |
| PHOTOPOLYMERIZATION INITIATOR [PARTS BY MASS] | Omnirad 379 | 3.6 | 3.6 | 3.6 | 3.6 | 3.6 |
| | TPO | 4.8 | 4.8 | 4.8 | 4.8 | 4.8 |
| | ITX | 0.3 | 0.3 | 0.3 | 0.3 | 0.3 |
| OTHER ADDITIVES [PARTS BY MASS] | MELAMINE | - | - | - | - | - |
| PIGMENT [PARTS BY MASS] | pigment blue 15:4 | 0.2 | 0.2 | 0.2 | 0.2 | 0.2 |
| | pigment yellow 147 | 0.4 | 0.4 | 0.4 | 0.4 | 0.4 |
| WATER CONTENT [%] | | 0.63 | 0.73 | 0.63 | 0.73 | 0.73 |

[Table 8]

TABLE VIII

| INK NO. | | 101 | 102 | 103 | 104 |
|---|---|---|---|---|---|
| BLOCKED ISOCYANATE [PARTS BY MASS] | BI7982 | 20 | 20 | 20 | 20 |
| (METH)ACRYLATE [PARTS BY MASS] | MONOMER A (ClogP:2.17) | 4.7 | 24.7 | 34.7 | 34.7 |
| | MONOMER B (ClogP:1.86) | 40 | 20 | 10 | 10 |
| | MONOMER C (ClogP:1.52) | 20 | 20 | 20 | 10 |
| | MONOMER D (ClogP:4.90) | - | - | - | 10 |
| | MONOMER E (ClogP:3.02) | - | - | - | - |
| | MONOMER F (ClogP:6.81) | - | - | - | - |
| | MONOMER G (ClogP:7.34) | - | - | - | - |
| ACRYLATE CONTAINING BISPHENOL A STRUCTURE [PARTS BY MASS] | EA-1010LC | 1 | 1 | 1 | 1 |
| | A-BPE-4 | 5 | 5 | 5 | 5 |
| PHOTOPOLYMERIZATION INITIATOR [PARTS BY MASS] | Omnirad 379 | 3.6 | 3.6 | 3.6 | 3.6 |
| | TPO | 4.8 | 4.8 | 4.8 | 4.8 |
| | ITX | 0.3 | 0.3 | 0.3 | 0.3 |
| PIGMENT [PARTS BY MASS] | pigment blue 15:4 | 0.2 | 0.2 | 0.2 | 0.2 |
| | pigment yellow 147 | 0.4 | 0.4 | 0.4 | 0.4 |
| WATER CONTENT [%] | | 0.23 | 0.23 | 0.25 | 0.23 |

[Table 9]

TABLE IX

| INK NO. | | 105 | 106 | 107 |
|---|---|---|---|---|
| BLOCKED ISOCYANATE [PARTS BY MASS] | BI7982 | 20 | 20 | 20 |
| (METH)ACRYLATE [PARTS BY MASS] | MONOMER A (ClogP:2.17) | 4.7 | 9.7 | 14.7 |
| | MONOMER B (ClogP:1.86) | 30 | 10 | 30 |
| | MONOMER C (ClogP:1.52) | - | - | - |
| | MONOMER D (ClogP:4.90) | 10 | 10 | 10 |
| | MONOMER E (ClogP:3.02) | 35 | - | - |
| | MONOMER F (ClogP:6.93) | - | 10 | - |
| | MONOMER G (ClogP:7.98) | - | - | 10 |
| ACRYLATE CONTAINING BISPHENOL A STRUCTURE [PARTS BY MASS] | EA-1010LC | 1 | 1 | 1 |
| | A-BPE-4 | 5 | 5 | 5 |
| PHOTOPOLYMERIZATION INITIATOR [PARTS BY MASS] | Omnirad 379 | 3.6 | 3.6 | 3.6 |
| | TPO | 4.8 | 4.8 | 4.8 |
| | ITX | 0.3 | 0.3 | 0.3 |
| PIGMENT [PARTS BY MASS] | pigment blue 15:4 | 0.2 | 0.2 | 0.2 |
| | pigment yellow 147 | 0.4 | 0.4 | 0.4 |

(continued)

| INK NO. | 105 | 106 | 107 |
|---|---|---|---|
| WATER CONTENT [%] | 0.24 | 0.23 | 0.22 |

<Treatment of Copper Substrate>

A copper-clad laminate for a printed wiring board (FR-4, 1.6 mm in thickness, 150 mm × 95 mm in size) was treated with a treatment liquid of CZ-8100 manufactured by MEC Company, Ltd. Thus, a pretreated copper substrate having a surface roughness Ra of 1.5 μm and a treatment depth of 1 μm was produced.

<Pattern Formation by Inkjet>

Each inkjet ink having the adjusted water content was loaded in an inkjet recording apparatus having an inkjet recording head provided with a piezo-type inkjet nozzle. Using this apparatus, patterns were formed on the above-described copper-pretreated copper-clad laminate for a printed wiring board (FR-4, 1.6 mm in thickness, 150 mm × 95 mm in size).

The ink supply system of the apparatus includes an ink tank, an ink channel, a sub-ink tank provided immediately before an inkjet recording head, a tube with a metal filter, and a piezo head.

The ink from the ink tank to the head portion was heated to 60°C. Next, a heater was also built in the piezo head, and the ink temperature in the piezo head was heated to 55°C. As the piezo head, KM1800i-SHC manufactured by Konica Minolta, Inc. was used.

Using this inkjet recording apparatus, a voltage was applied such that the droplet amount became a dot of 3.5 pl. Then, a solid pattern of 70 mm x 70 mm and a comb pattern of 100 μm line and space were printed on the substrate, each with a thickness of 30 μm. The ink layer was temporarily cured by irradiation with an LED lamp (365 nm) manufactured by Phoseon Technology, Inc. at 200 mJ/$cm^2$ for each pass. Thereafter, the substrate was placed in an oven set at 150°C for 60 minutes for complete curing and then further irradiated with a mercury vapor lamp at 2000 mJ/$cm^2$ to obtain a printed sample.

<Hydroxy Value in Ink>

The hydroxy value in each ink was calculated from the charged composition of a compound having hydroxy groups in 1 g of the ink. The specific calculation method is shown in Equation (a) below.

Hydroxy value [mg KOH/g] = A [mol] × (number of hydroxy groups of a compound having hydroxy groups) × B [mg/mol] (a)

In the above Equation (a), "A" represents the number of moles of the compound having hydroxy groups in 1 g of the ink. Furthermore, "B" represents the molecular weight of 1 mol of potassium hydroxide (56000 [mg/mol]).

When a plurality of types of compounds having hydroxy groups are contained in the ink, the hydroxy value is calculated for each compound having hydroxy groups by Equation (a). The sum of the obtained hydroxyl values is defined as the hydroxyl value in 1 g of the ink.

The obtained hydroxy value was ranked according to the following criteria.

(Criteria)

A: Equal to or less than 30 mg KOH/g
B: Greater than 30 mg KOH/g and equal to or less than 45 mg KOH/g
C: Greater than 45 mg KOH/g and equal to or less than 60 mg KOH/g
D: Greater than 60 mg KOH/g

[Evaluation]

<Solid Generation Amount>

300 ml of each ink having the adjusted water content was subjected to pressure filtration using a PTFE filter (2 mm in diameter) having a pore size of 5 μm. Thereafter, the PTFE filter having a pore size of 5 μm was taken out and washed with ethanol and then checked for the presence or absence of solid generation by an optical microscope. The amount of solids generated was evaluated as follows. "A", "B", and "C" according to the following criteria were determined to be satisfactory for practical use.

(Criteria)

A: No solid is present on the entire surface of the filter.
B: Solids are present to the extent of less than 1% of the filter area.
C: Solids are present in a range of 1% or more and less than 5% of the filter area.
D: Solids are present in a range of 5% or more of the filter area.

<Ejection Stability of Ink>

(Number of Deficient Nozzles after 200 kg of Ink Ejection)

The above-described piezo head was used to continuously eject (drive) the ink under conditions of a droplet amount of 3.5 pl, a droplet speed of 7 m/sec, an ejection frequency of 20 kHz, and a print rate of 100%. The number of non-ejecting nozzles was counted after ejecting 200 kg of ink. "A", "B", and "C" according to the following criteria were determined to be satisfactory for practical use.

A: The number of deficient nozzles is zero.

B: The number of deficient nozzles is one or more and less than three.

C: The number of deficient nozzles is three or more and less than five.

D: The number of deficient nozzles is five or more and less than ten.

E: The number of deficient nozzles is 10 or more.

<Adhesion to Substrate>

For the printed sample of the solid pattern obtained above, cuts were made in the cured film in a grid pattern according to the cross-cut method of JIS K5600, and an adhesive tape was attached and then peeled off. Thereby, the peeling state of the cured film was observed, and the adhesion to the substrate was evaluated according to the following. "A" and "B" in the following criteria were determined to have no practical problem.

A: The adhesion residual rate is 100%.
B: The adhesion residual rate is 80% or more and less than 100%.
C: The adhesion residual rate is 60% or more and less than 80%.
D: The adhesion residual rate is less than 60%.

<Acid Resistance>

For the printed sample of the solid pattern obtained above, the cured film was immersed in 10% hydrochloric acid for 30 minutes, then washed with water, and dried. Thereafter, the cured film was cut in a grid pattern according to the cross-cut method of JIS K5600, and an adhesive tape was attached and then peeled off. Thereby, the peeling state of the cured film was observed, and the acid resistance was evaluated according to the following. "A" and "B" in the following criteria were determined to have no practical problem.

A: The adhesion residual rate is 100%.
B: The adhesion residual rate is 80% or more and less than 100%.

C: The adhesion residual rate is 60% or more and less than 80%.
D: The adhesion residual rate is less than 60%.

[Table 10]

TABLE X

| INK NO. | | 1 | 2 | 3 | 4 | 5 | 6 | 7 | 8 | 9 |
|---|---|---|---|---|---|---|---|---|---|---|
| WATER CONTENT [%] | | 0.22 | 0.24 | 0.23 | 0.25 | 0.23 | 0.24 | 0.23 | 0.25 | 0.22 |
| HEDROXY VALUE | | A | A | A | A | A | A | B | A | A |
| SOLID GENERATION AMOUNT | | A | A | A | A | A | A | B | A | A |
| EJECTION STABILITY | DEFICIENCY AFTER 200 KG EJECTION | A | A | A | A | A | A | B | A | A |
| ADHESION TO SUBSTRATE | | B | B | B | A | B | B | A | B | A |
| ACID RESISTANCE | | B | B | B | B | B | B | B | B | B |
| REMARKS | | *1 | *1 | *1 | *1 | *1 | *1 | *1 | *1 | *1 |
| *1: PRESENT INVENTION | | | | | | | | | | |

[Table 11]

TABLE XI

| INK NO. | | 10 | 11 | 12 | 13 | 14 | 15 | 16 | 17 |
|---|---|---|---|---|---|---|---|---|---|
| WATER CONTENT [%] | | 0.23 | 0.25 | 0.23 | 0.22 | 0.24 | 0.23 | 0.24 | 0.23 |
| HEDROXY VALUE | | A | A | A | B | B | B | B | B |
| SOLID GENERATION AMOUNT | | A | A | A | B | B | B | B | B |
| EJECTION STABILITY | DEFICIENCY AFTER 200 KG EJECTION | A | A | A | B | B | B | B | B |
| ADHESION TO SUBSTRATE | | A | A | A | A | A | A | A | A |
| ACID RESISTANCE | | B | A | A | A | A | A | A | A |
| REMARKS | | *1 | *1 | *1 | *1 | *1 | *1 | *1 | *1 |
| *1: PRESENT INVENTION | | | | | | | | | |

[Table 12]

TABLE XII

| INK NO. | | 18 | 19 | 20 | 21 | 22 | 23 | 24 |
|---|---|---|---|---|---|---|---|---|
| WATER CONTENT [%] | | 0.23 | 0.25 | 0.22 | 0.24 | 0.05 | 0.50 | 0.57 |
| HEDROXY VALUE | | A | B | C | D | A | A | A |
| SOLID GENERATION AMOUNT | | A | B | B | C | A | B | C |
| EJECTION STABILITY | DEFICIENCY AFTER 200 KG EJECTION | A | B | B | C | A | B | C |

(continued)

| INK NO. | 18 | 19 | 20 | 21 | 22 | 23 | 24 |
|---|---|---|---|---|---|---|---|
| ADHESION TO SUBSTRATE | A | A | A | A | A | A | A |
| ACID RESISTANCE | B | B | A | A | A | A | A |
| REMARKS | *1 | *1 | *1 | *1 | *1 | *1 | *1 |
| *1: PRESENT INVENTION | | | | | | | |

[Table 13]

TABLE XIII

| INK NO. | | 25 | 26 | 27 | 28 | 29 |
|---|---|---|---|---|---|---|
| WATER CONTENT [%] | | 0.63 | 0.73 | 0.63 | 0.73 | 0.73 |
| HEDROXY VALUE | | A | A | A | A | A |
| SOLID GENERATION AMOUNT | | D | D | C | C | A |
| EJECTION STABILITY | DEFICIENCY AFTER 200 KG EJECTION | D | E | D | D | A |
| ADHESION TO SUBSTRATE | | B | B | B | B | D |
| ACID RESISTANCE | | B | B | B | B | D |
| REMARKS | | *1 | *1 | *1 | *1 | *1 |
| *1: COMPARATIVE EXAMPLE | | | | | | |

[Table 14]

TABLE XIV

| INK NO. | | 101 | 102 | 103 | 104 | 105 | 106 | 107 |
|---|---|---|---|---|---|---|---|---|
| WATER CONTENT [%] | | 0.23 | 0.23 | 0.25 | 0.23 | 0.24 | 0.23 | 0.22 |
| HEDROXY VALUE | | A | A | A | A | A | A | A |
| SOLID GENERATION AMOUNT | | B | A | A | A | A | A | B |
| EJECTION STABILITY | DEFICIENCY AFTER 200 KG EJECTION | B | A | A | A | A | A | B |
| ADHESION TO SUBSTRATE | | A | A | A | A | A | A | A |
| ACID RESISTANCE | | B | A | A | A | A | A | A |
| REMARKS | | *1 | *1 | *1 | *1 | *1 | *1 | *1 |
| *1: PRESENT INVENTION | | | | | | | | |

As shown in the above results, the ink of the present invention suppresses the solid generation and is excellent in ejection property, adhesion to a substrate and acid resistance as compared with the inks of comparative examples. Therefore, it is recognized that even when an ink containing a blocked isocyanate is used, good ejection property, stable curability and coating film performance can be obtained.

[Example 2]

<Preparation of Ink>

The components were mixed according to the ink compositions listed in Tables XV and XVI below. The mixed solutions were filtered through a Teflon membrane filter (manufactured by ADVANTEC) having a pore size of 3 μm while heated to 40°C to prepare inks 201 to 211.

For the ink 201, the water content after preparation was measured. After preparation, the inks 202 to 211 were stored under an environment of 30°C and 90% RH for several days to adjust the water content to the values shown in the following tables. Note that the measurement of the water content is as described above.

[Table 15]

TABLE XV

| INK NO. | | 201 | 202 | 203 | 204 | 205 | 206 |
|---|---|---|---|---|---|---|---|
| BLOCKED ISOCYANATE [PARTS BY MASS] | BI7982 | 18 | 18 | 18 | 18 | 18 | 18 |
| (METH)ACRYLATE [PARTS BY MASS] | 1,6-HEXANEDIOL DIACRYLATE | 18 | 18 | 18 | 18 | 18 | 18 |
| | DIPROPYLENE GLYCOL DIACRYLATE | 27.7 | 27.7 | 27.7 | 27.7 | 27.7 | 27.7 |
| | 4-HYDROXYBUTYL ACRYLATE | 2 | 2 | 2 | 2 | 2 | 2 |
| | EO-MODIFIED TRIMETHYLOLPROPANE TRIACRYLATE | 3.5 | 3.5 | 3.5 | 3.5 | 3.5 | 3.5 |
| ACRYLATE CONTAINING BISPHENOL A STRUCTURE [PARTS BY MASS] | EBECRYL 150 | 20 | 20 | 20 | 20 | 20 | 20 |
| PHOTOPOLYMERIZATION INITIATOR [PARTS BY MASS] | Omnirad 379 | 3.6 | 3.6 | 3.6 | 3.6 | 3.6 | 3.6 |
| | TPO | 4.8 | 4.8 | 4.8 | 4.8 | 4.8 | 4.8 |
| | ITX | 0.3 | 0.3 | 0.3 | 0.3 | 0.3 | 0.3 |
| PIGMENT [PARTS BY MASS] | pigment blue 15:4 | 0.2 | 0.2 | 0.2 | 0.2 | 0.2 | 0.2 |
| | pigment yellow 147 | 0.4 | 0.4 | 0.4 | 0.4 | 0.4 | 0.4 |
| WATER CONTENT [%] | | 0.28 | 0.31 | 0.33 | 0.40 | 0.45 | 0.51 |

[Table 16]

TABLE XVI

| INK NO. | | 207 | 208 | 209 | 210 | 211 |
|---|---|---|---|---|---|---|
| BLOCKED ISOCYANATE [PARTS BY MASS] | BI7982 | 18 | 18 | 18 | 18 | 18 |

(continued)

| INK NO. | | 207 | 208 | 209 | 210 | 211 |
|---|---|---|---|---|---|---|
| (METH)ACRYLATE [PARTS BY MASS] | 1,6-HEXANEDIOL DIACRYLATE | 18 | 18 | 18 | 18 | 18 |
| | DIPROPYLENE GLYCOL DIACRYLATE | 27.7 | 27.7 | 27.7 | 27.7 | 27.7 |
| | 4-HYDROXYBUTYL ACRYLATE | 2 | 2 | 2 | 2 | 2 |
| | EO-MODIFIED TRIMETHYLOLPROPANE TRIACRYLATE | 5 | 5 | 5 | 5 | 5 |
| ACRYLATE CONTAINING BISPHENOL A STRUCTURE [PARTS BY MASS] | EBECRYL 150 | 20 | 20 | 20 | 20 | 20 |
| PHOTOPOLYMERIZATION INITIATOR [PARTS BY MASS] | Omnirad 379 | 3.6 | 3.6 | 3.6 | 3.6 | 3.6 |
| | TPO | 4.8 | 4.8 | 4.8 | 4.8 | 4.8 |
| | ITX | 0.3 | 0.3 | 0.3 | 0.3 | 0.3 |
| PIGMENT [PARTS BY MASS] | pigment blue 15:4 | 0.2 | 0.2 | 0.2 | 0.2 | 0.2 |
| | pigment yellow 147 | 0.4 | 0.4 | 0.4 | 0.4 | 0.4 |
| WATER CONTENT [%] | | 0.55 | 0.54 | 0.58 | 0.55 | 0.63 |

[Evaluation]

<Storage in Container>

The following containers were processed to have a size that can be filled with 5 kg of ink. The processed containers were filled with ink, and for the inks after storage for 3 months and after storage for 6 months under an environment of 35°C and 90% RH, the evaluations described in Table XVII and Table XVIII were performed.

The water vapor transmission rate of the containers shown in the following tables is a value measured under the conditions of 40°C and 90% RH.

(Container)

a: GX-P-F (manufactured by Toppan Inc.)
b: GL-ARH (manufactured by Toppan Inc.)
c: Barrialox (R) coated type 1011 HGCW (manufactured by Toray Advanced Film Co., Ltd.)
d: A-OP AG #30 (manufactured by Mitsui Chemicals Tohcello, Inc.)
e: Barrialox (R) coated type 1011 HGCR (manufactured by Toray Advanced Film Co., Ltd.)

[Table 17]

TABLEXVII

| | | | 201 | 202 | 203 | 204 | 205 | 206 |
|---|---|---|---|---|---|---|---|---|
| INK | INK NO. | | 201 | 202 | 203 | 204 | 205 | 206 |
| | WATER CONTENT [%] | | 0.28 | 0.31 | 0.33 | 0.40 | 0.45 | 0.51 |
| | HYDROXY VALUE | | A | A | A | A | A | A |
| CONTAINER | CONTAINER TYPE | | - | a | a | b | b | c |
| | WATER VAPOR TRANSMISSION RATE 0.05 ~1.50g/m$^2$·day·atm | | - | 0.05 | 0.05 | 0.40 | 0.40 | 1.05 |
| | STORAGE PERIOD IN CONTAINER | 35°C, 90%RH | 0 MONTH | 3 MONTHS | 6 MONTHS | 3 MONTHS | 6 MONTHS | 3 MONTHS |
| EVALUATION | SOLID GENERATION AMOUNT | | A | A | A | A | B | B |
| | EJECTION STABILITY | DEFICIENCY AFTER 200 KG EJECTION | A | A | A | A | B | B |
| | ADHESION TO SUBSTRATE | | A | A | A | A | A | A |
| | ACID RESISTANCE | | A | A | A | A | A | A |
| REMARKS | | | *1 | *1 | *1 | *1 | *1 | *1 |

*1: PRESENT INVENTION

[Table 18]

TABLE XVIII

<table>
<tr><td rowspan="3">INK</td><td colspan="2">INK NO.</td><td>207</td><td>208</td><td>209</td><td>210</td><td>211</td></tr>
<tr><td colspan="2">WATER CONTENT [%]</td><td>0.55</td><td>0.54</td><td>0.58</td><td>0.55</td><td>0.63</td></tr>
<tr><td colspan="2">HYDROXY VALUE</td><td>A</td><td>A</td><td>A</td><td>A</td><td>A</td></tr>
<tr><td rowspan="3">CONTAINER</td><td colspan="2">CONTAINER TYPE</td><td>c</td><td>d</td><td>d</td><td>e</td><td>e</td></tr>
<tr><td colspan="2">WATER VAPOR TRANSMISSION RATE 0.05-1.50g/m$^2$·day·atm</td><td>1.0</td><td>1.4</td><td>1.4</td><td>1.6</td><td>1.6</td></tr>
<tr><td>STORAGE PERIOD IN CONTAINER</td><td>35°C, 90%RH</td><td>6 MONTHS</td><td>3 MONTHS</td><td>6 MONTHS</td><td>3 MONTHS</td><td>6 MONTHS</td></tr>
<tr><td rowspan="4">EVALUATION</td><td colspan="2">SOLID GENERATION AMOUNT</td><td>B</td><td>B</td><td>B</td><td>B</td><td>C</td></tr>
<tr><td>EJECTION STABILITY</td><td>DEFICIENCY AFTER 200 KG EJECTION</td><td>B</td><td>B</td><td>C</td><td>C</td><td>E</td></tr>
<tr><td colspan="2">ADHESION TO SUBSTRATE</td><td>A</td><td>A</td><td>A</td><td>A</td><td>A</td></tr>
<tr><td colspan="2">ACID RESISTANCE</td><td>A</td><td>A</td><td>A</td><td>A</td><td>A</td></tr>
<tr><td colspan="3">REMARKS</td><td>*1</td><td>*1</td><td>*1</td><td>*1</td><td>*1</td></tr>
<tr><td colspan="8">*1: PRESENT INVENTION</td></tr>
</table>

As shown in the above results, it is found that when an ink is contained in the container in which the water vapor transmission rate is in a range of 0.05 to 1.50 g/m$^2$·day·atm under the conditions of 40°C and 90% RH, even in a case where the ink is stored for a long period of time, the solid generation is suppressed, and the ejection property, the adhesion to a substrate, and the acid resistance are excellent.

Industrial Applicability

The present invention can be used for an inkjet ink, a solder resist, a printed wiring board, a method for forming a coating film, and a coating film forming apparatus, with which good ejection property, stable curability, and coating film performance can be obtained even when an inkjet ink containing a blocked isocyanate is used.

Reference Signs List

1 inkjet recording apparatus (coating film forming apparatus)
24a recording head
24b ink channel
50 ink supply section
51 ink tank
53 supply pump
241 first sub-tank
241a first float sensor
242 deaeration module
243 liquid feed pump
244 check valve
245 second sub-tank

245a second float sensor
249 vacuum pump
270 ink heating section (heating means according to the present invention)
280 deaeration device
2421 outer shell (chamber)
2424 central tube
2424b fine hole (hole)
2426 hollow fiber membrane (gas permeable membrane)
2427 heating section (heating means according to the present invention)
2428 second heating section (heating means according to the present invention)

## Claims

1. An inkjet ink containing:

   a polymerizable monomer;
   a blocked isocyanate; and
   a photopolymerization initiator, wherein
   a water content of the inkjet ink measured by a Karl Fischer method is within a range of 0.05% to 0.60% by mass relative to a total mass of the inkjet ink.

2. The inkjet ink according to claim 1, wherein the ink is configured to be ejected at a temperature of 40°C or higher.

3. The inkjet ink according to claim 1, wherein the blocked isocyanate has an aromatic ring structure.

4. The inkjet ink according to claim 1, wherein the blocked isocyanate has an isocyanurate structure.

5. The inkjet ink according to claim 1, wherein the inkjet ink contains, relative to the inkjet ink, 30% by mass or more of the polymerizable monomer having an octanol/water partition coefficient (ClogP) value in a range of 2.0 to 7.0.

6. The inkjet ink according to claim 1, wherein the polymerizable monomer contains a polymerizable monomer having at least one bisphenol A structure.

7. The inkjet ink according to claim 1, wherein a sum of a hydroxy value of a compound contained in the inkjet ink is 60 mg KOH/g or less, the compound having a hydroxy group.

8. The inkjet ink according to claim 1, wherein the inkjet ink is contained in a container having a water vapor transmission rate within a range of 0.05 to 1.50 $g/m^2 \cdot day \cdot atm$ under conditions of 40°C and 90% RH.

9. A solder resist containing the inkjet ink according to any one of claims 1 to 8.

10. A printed wiring board comprising the solder resist according to claim 9.

11. A method for forming a coating film, comprising: using the inkjet ink according to any one of claims 1 to 8; and heating the inkjet ink to 40°C or higher in a channel for supplying the inkjet ink to an inkjet head of a coating film forming apparatus.

12. A coating film forming apparatus comprising: the inkjet ink according to any one of claims 1 to 8; and a means for heating the inkjet ink to 40°C or higher in a channel for supplying the inkjet ink to an inkjet head of the coating film forming apparatus.

# FIG.1

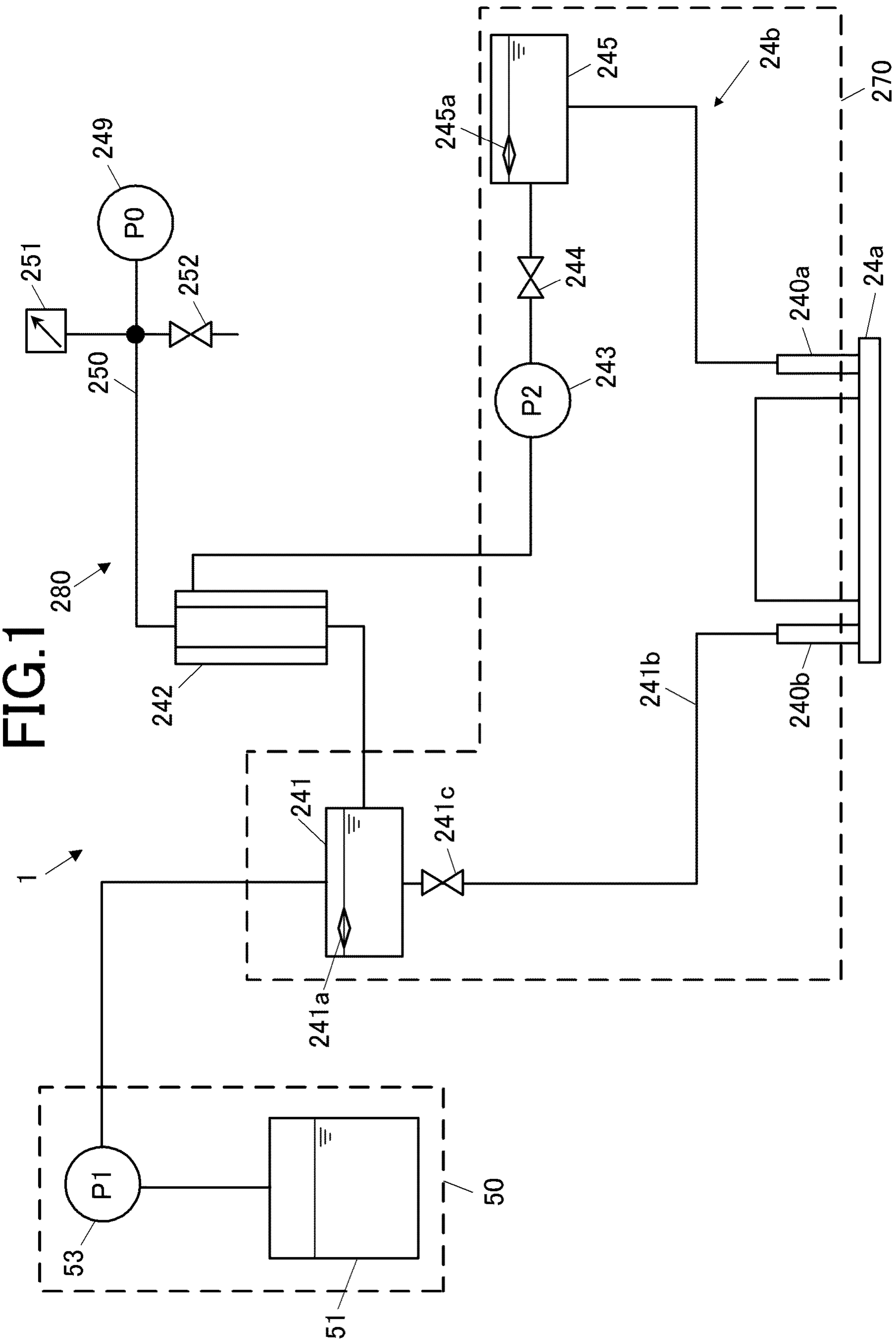
1
50
51
53
P1
241
241a
241b
241c
242
243
P2
244
245
245a
24a
24b
240a
240b
249
P0
250
251
252
270
280

FIG.2

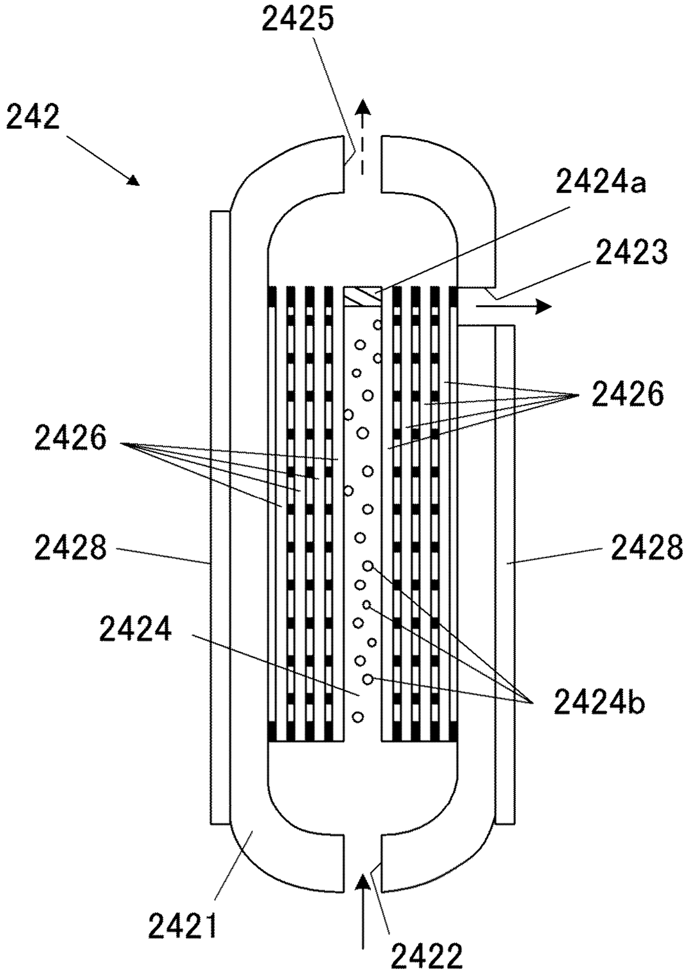

FIG.3A

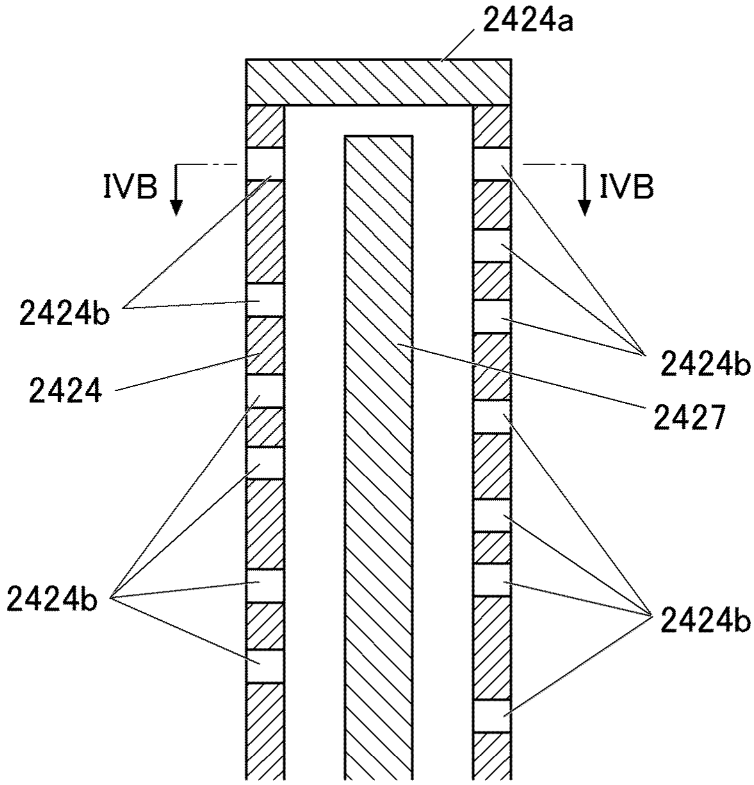
2424a
IVB
IVB
2424b
2424b
2424
2427
2424b
2424b

FIG.3B

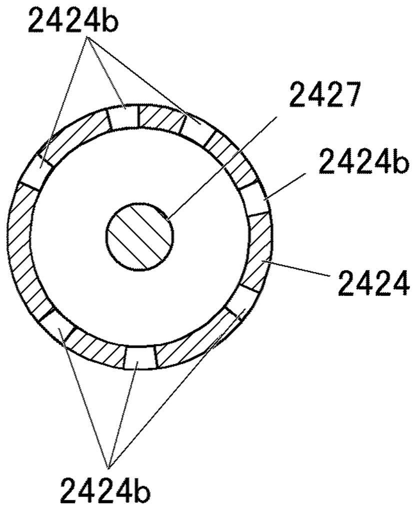
2424b
2427
2424b
2424
2424b

## INTERNATIONAL SEARCH REPORT

International application No.
**PCT/JP2024/020503**

**A. CLASSIFICATION OF SUBJECT MATTER**

***C09D 11/38***(2014.01)i; ***B41J 2/01***(2006.01)i; ***B41J 2/17***(2006.01)i; ***B41M 5/00***(2006.01)i
FI: C09D11/38; B41M5/00 120; B41J2/01 501; B41J2/17

According to International Patent Classification (IPC) or to both national classification and IPC

**B. FIELDS SEARCHED**

Minimum documentation searched (classification system followed by classification symbols)

C09D11/38; B41J2/01; B41J2/17; B41M5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2011-32405 A (TOAGOSEI CO., LTD.) 17 February 2011 (2011-02-17) claims, paragraphs [0039], [0041]-[0042], [0063], [0066]-[0067] | 1-4, 9-12 |
| A | same as above | 5-8 |
| Y | JP 2014-201593 A (TOAGOSEI CO., LTD.) 27 October 2014 (2014-10-27) claims, paragraph [0075] | 1-4, 9-12 |
| A | same as above | 5-8 |
| Y | JP 2022-7466 A (TAIYO INK MFG CO., LTD.) 13 January 2022 (2022-01-13) paragraph [0045] | 11-12 |
| A | JP 2004-352804 A (TDK CORPORATION) 16 December 2004 (2004-12-16) claims | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/020503**

| Patent document cited in search report | Publication date (day/month/year) | Patent family member(s) | Publication date (day/month/year) |
|---|---|---|---|
| JP 2011-32405 A | 17 February 2011 | (Family: none) | |
| JP 2014-201593 A | 27 October 2014 | (Family: none) | |
| JP 2022-7466 A | 13 January 2022 | (Family: none) | |
| JP 2004-352804 A | 16 December 2004 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 06069300 B
- JP 2011043565 A
- JP 05969208 B
- JP 2014201593 A
- WO 2022102058 A


### Non-patent literature cited in the description


- **C. HANSCH** ; **A. LEO**. Substituent Constants for Correlation Analysis in Chemistry and Biology. John Wiley & Sons, 1969
- Organic Materials for Imaging. The Japanese Research Association for Organic Electronics Materials. Bun-Shin Co., Ltd., 1993, 187-192